# EUROPEAN PATENT APPLICATION

(11) **EP 4 270 628 A1**
(43) Date of publication of application: **01.11.2023**
(21) Application number: 22756576.9
(22) Date of filing: 18.02.2022
(51) Int. Cl.: H01M 50/538, H01M 50/536, H01M 10/04, H01M 50/567, H01M 50/559, H01M 50/547, H01M 50/167, H01M 50/528

(54) **ELECTRODE ASSEMBLY AND BATTERY, AND BATTERY PACK AND VEHICLE COMPRISING SAME**

(30) Priority: 19.02.2021 KR 20210022854; 19.02.2021 KR 20210022891; 19.02.2021 KR 20210022894; 08.03.2021 KR 20210030300; 01.10.2021 KR 20210131205; 01.10.2021 KR 20210131215; 22.10.2021 KR 20210142197
(71) Applicant: LG Energy Solution, Ltd., Seoul 07335 (KR)
(72) Inventor: KIM, Min-Woo, Daejeon 34122 (KR); KIM, Do-Gyun, Daejeon 34122 (KR); CHO, Kyung-Wook, Daejeon 34122 (KR); MIN, Geon-Woo, Daejeon 34122 (KR); JO, Min-Ki, Daejeon 34122 (KR); KIM, Jae-Woong, Daejeon 34122 (KR); HWANGBO, Kwang-Su, Daejeon 34122 (KR); LIM, Hae-Jin, Daejeon 34122 (KR); CHOI, Su-Ji, Daejeon 34122 (KR); LIM, Jae-Won, Daejeon 34122 (KR); KIM, Hak-Kyun, Daejeon 34122 (KR); LEE, Je-Jun, Daejeon 34122 (KR); JUNG, Ji-Min, Daejeon 34122 (KR)
(74) Representative: Goddar, Heinz J.
(86) International application number: PCT/KR2022/002469
(87) International publication number: WO 2022/177378

(57) **Abstract**

Provided are an electrode assembly, a battery, and a battery pack and vehicle including the same. An electrode assembly, in which a first electrode, a second electrode, and a separator interposed therebetween are wound about an axis to define a core and an outer circumferential surface, wherein at least one of the first electrode and the second electrode comprises, at a long side end portion, an uncoated portion exposed beyond the separator in a direction of the axis; at least a part of the uncoated portion is bent in a radial direction of the electrode assembly to define a bent surface region having overlapping layers of the uncoated portion; and the bent surface region comprises a welding target region having a number of the overlapping layers of the uncoated portion, the welding target region extending along a radial direction of the electrode assembly.

## Description

### TECHNICAL FIELD

The present disclosure relates to an electrode assembly, a battery, and a battery pack and vehicle including the same.

The present application claims priority to Korean Patent Application No. 10-2021-0022854 filed on February 19, 2021, Korean Patent Application No. 10-2021-0022894 filed on February 19, 2021, Korean Patent Application No. 10-2021-0022891 filed on February 19, 2021, Korean Patent Application No. 10-2021-0030300 filed on March 8, 2021, Korean Patent Application No. 10-2021-0131215 filed on October 1, 2021, Korean Patent Application No. 10-2021-0131205 filed on October 1, 2021, and Korean Patent Application No. 10-2021-0142197 filed on October 22, 2021, the disclosures of which are incorporated herein by reference.

### BACKGROUND ART

A secondary battery having ease of application according to product groups and an electric characteristic, such as high energy density, is universally applied to not only a portable device, but also an electric vehicle (EV) or hybrid electric vehicle (HEV) driven by an electric driving source.

Such a secondary battery is receiving attention as a new energy source for being eco-friendly and enhancing energy efficiency, because the secondary battery not only has a primary merit of remarkably reducing the use of fossil fuel, but also a merit of absolutely not generating byproducts according to the use of energy.

Types of the secondary battery currently widely used include a lithium-ion battery, a lithium polymer battery, a nickel cadmium battery, a nickel hydrogen battery, and a nickel zinc battery. An operating voltage of such a unit secondary battery, i.e., a unit battery, is about 2.5 V to 4.5 V. Accordingly, when an output voltage higher than the operating voltage is required, a battery pack is configured by connecting a plurality of batteries in series. Also, a battery pack is configured by connecting a plurality of batteries in parallel, according to charging and discharging capacity required in the battery pack. Thus, the number of batteries included in the battery pack and an electric connection form thereof may be variously set depending on a required output voltage and/or charging and discharging capacity.

Meanwhile, cylindrical, prismatic, and pouch type batteries are known as types of the unit secondary battery. In the cylindrical battery, a battery is configured by arranging a separator, i.e., an insulator, between a positive electrode and a negative electrode, winding the same to form an electrode assembly having a j elly-roll shape, and inserting the electrode assembly inside a battery housing. An electrode tab having a strip shape may be connected to an uncoated portion of each of the positive electrode and the negative electrode, and the electrode tab electrically connects the electrode assembly to an electrode terminal that is externally exposed. For reference, a positive electrode terminal is a cap of a sealing body sealing an opening of the battery housing, and a negative electrode terminal is the battery housing. However, according to a cylindrical battery of the related art having such a structure, a current is focused on an electrode tab having a strip shape, combined to a positive electrode uncoated portion and/or a negative electrode uncoated portion, and thus resistance is high, a lot of heat is generated, and current collection efficiency is poor.

A small cylindrical battery having a form factor of 1865 or 2170 does not have significant issues of resistance and heat generation. However, when a form factor is increased in order to apply the cylindrical battery to an electric vehicle, the cylindrical battery may be ignited as a lot of heat is generated around the electrode tab during a quick charging process.

In this regard, a cylindrical battery (so-called a tab-less cylindrical battery) having a structure in which current collection efficiency is improved by designing a positive electrode uncoated portion and a negative electrode uncoated portion to be respectively located at the top and bottom of a jelly-roll type electrode assembly and welding a current collector to such uncoated portions has been proposed.

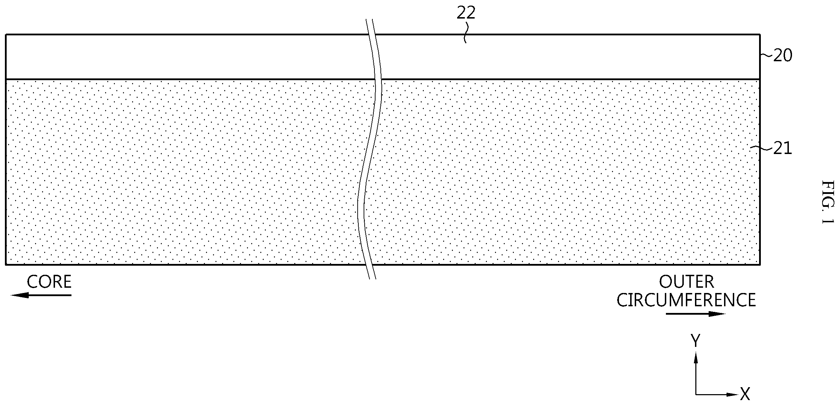

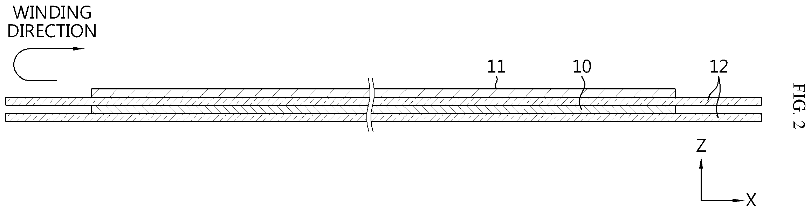

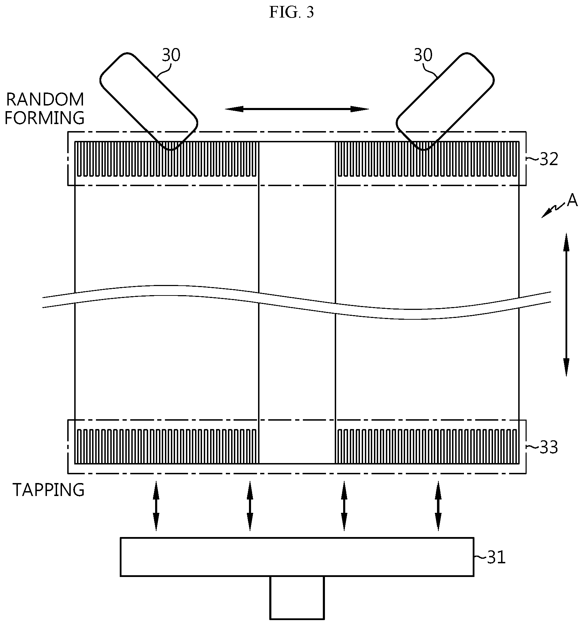

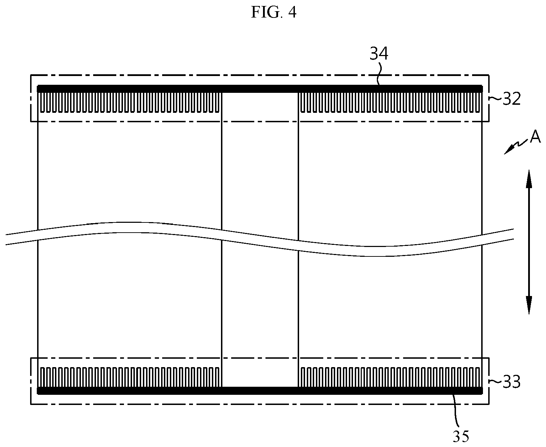

FIGS. 1 through 4 are diagrams showing processes of manufacturing a tab-less cylindrical battery. FIG. 1 illustrates a structure of an electrode, FIG. 2 illustrates a process of winding the electrode, FIG. 3 illustrates a process of bending uncoated portions 32 and 33 by using a forming jig 30, and FIG. 4 is a diagram showing a state in which current collectors 34 and 35 are welded to a bent surface region of the uncoated portions 32 and 33.

Referring to FIGS. 1 through 4, a positive electrode 10 and a negative electrode 11 each have a structure in which an active material 21 is coated on a conductive substrate 20 having a sheet shape, and include an uncoated portion 22 at one long side along a winding direction X.

An electrode assembly A is manufactured by sequentially stacking the positive electrode 10 and the negative electrode 11 together with two separators 12, as shown in FIG. 2, and winding the same in one direction X. Here, uncoated portions of the positive electrode 10 and the negative electrode 11 are arranged in opposite directions in the winding axis Y direction.

After a winding process, the uncoated portion 32 of the positive electrode 10 and the uncoated portion 33 of the negative electrode 11 are bent towards a core. Thereafter, the current collectors 34 and 35 having a plate shape are combined to the uncoated portions 32 and 33, respectively, via welding.

A separate electrode tab is not combined to the positive electrode uncoated portion 32 and the negative electrode uncoated portion 33, and the current collectors 34 and 35 are connected to an external electrode terminal. A current path is formed with a large cross-sectional area along a winding axis direction (refer to an arrow) of the electrode assembly A, and thus resistance of a battery may be decreased. This is because the resistance is inversely proportional to a cross-sectional area of a path where a current flows.

In the tab-less cylindrical battery, the uncoated portions 32 and 33 need to be bent as flat as possible by applying strong pressure to welding points of the uncoated portions 32 and 33, so as to enhance welding characteristics between the uncoated portions 32 and 33 and the current collectors 34 and 35.

Also, bending portions of the uncoated portions 32 and 33, where the current collectors 34 and 35 are welded, need to overlap in multiple layers, and the volume of an empty space (gap) in the bending portions should not be large. Only then sufficient welding strength may be obtained, and even when latest technology, such as laser welding, is used, a separator or active material may be prevented from being ablated as a laser beam penetrates into the electrode assembly A.

For the uncoated portions 32 and 33 to be uniformly overlapped along a radial direction of the electrode assembly A, an uncoated portion at a location of each winding turn need to be bent towards a core while covering a top surface of the uncoated portion bent at an inner winding turn. Also, when an interval of uncoated portions between winding turns adjacent to each other based on the radial direction of the electrode assembly A is d and a bending length of an uncoated portion located at each winding turn is e, the bending length e should have a length equal to or greater than d × n (n is a natural number equal to or greater than 2). Only then regions where the uncoated portions 32 and 33 overlap in multiple layers are generated. Also, lengths of the uncoated portions 32 and 33 should be sufficiently large so as to form regions, where the uncoated portions 32 and 33 are overlapped in the same number, in sufficient lengths in the radial direction of the electrode assembly A. However, an electrode assembly included in a small cylindrical battery has a small radius, and thus it is difficult to have an idea of a motive to derive a concept of designing bending lengths of the uncoated portions 32 and 33 sufficiently long.

Also, a diameter of the small cylindrical battery is small, such as 18 mm or 21 mm, and thus it is difficult to bend the uncoated portions 32 and 33 to be uniformly overlapped in multiple layers. Accordingly, when the uncoated portions 32 and 33 are bent, end portions of the uncoated portions 32 and 33 may be randomly rubbed and formed by using the forming jig 30, or bent surface regions may be formed by repeatedly tapping the uncoated portions 32 and 33 by using a jig 31 moving up and down.

Also, even when a method of bending the uncoated portions 32 and 33 in the radial direction of the electrode assembly A is used, a purpose thereof is focused only on forming the bent surface regions, and there is no special purpose on minutely adjusting overlapping structures of the uncoated portions 32 and 33. Accordingly, in an electrode assembly used in the small cylindrical battery of the related art, it is difficult to find structures of the uncoated portions 32 and 33 being uniformly overlapped in multiple layers along a radial direction of the electrode assembly A.

### DISCLOSURE

### Technical Problem

The present disclosure is designed to solve the problems of the related art, and therefore the present disclosure is directed to providing an electrode assembly having an uncoated portion bending structure, wherein, even when a welding output is increased, damage to an active material layer or separator may be prevented by securing a sufficient length of a region where an uncoated portion is uniformly overlapped in multiple layers, in a radial direction of the electrode assembly, when uncoated portions exposed at both ends of the electrode assembly are bent.

The present disclosure is also directed to providing an electrode assembly in which energy density is improved and resistance is decreased.

The present disclosure is also directed to providing a battery including an electrode assembly having an improved structure, a battery pack including the battery, and a vehicle including the battery pack.

The technical problems to be solved in the present disclosure are not limited to the above, and other problems that are not mentioned could be clearly understood by one of ordinary skill in the art from the description of the present disclosure below.

### Technical Solution

In one aspect of the present disclosure for achieving the technical solution, there is provided an electrode assembly, in which a first electrode, a second electrode, and a separator interposed therebetween are wound about an axis to define a core and an outer circumferential surface, wherein at least one of the first electrode and the second electrode comprises, at a long side end portion, an uncoated portion exposed beyond the separator in a direction of the axis, wherein at least a part of the uncoated portion is bent in a radial direction of the electrode assembly to define a bent surface region having overlapping layers of the uncoated portion, and wherein the bent surface region comprises a welding target region having a number of the overlapping layers of the uncoated portion, the welding target region extending along a radial direction of the electrode assembly.

A thickness of the uncoated portion may be 5 µm to 25 µm, and an interval between the uncoated portions in adjacent winding turns may be 350 µm to 380 µm.

In the welding target region, the average stacking thickness of the overlapping layers of the uncoated portion may be 25 µm or more.

In the welding target region, the overlapping layers of the uncoated portion may be stacked in a substantially perpendicular direction to the axis.

A ratio of a length of the welding target region in the radial direction to a radius of the electrode assembly may be 30% or greater, optionally 40% or greater, optionally 50% or greater, optionally 60% or greater, optionally 70% or greater, or optionally 80% or greater.

The welding target region may have an average number of overlapping layers of the uncoated portion that is 5 or greater, optionally 6 or greater, optionally 7 or greater, optionally 8 or greater, optionally 9 or greater, or optionally 10 or greater, along the radial direction of the electrode assembly.

The welding target region may have an average number of overlapping layers of the uncoated portion that is 5 to 15.

Another part of the uncoated portion may not be bent and a boundary between the welding target region and the another part of the uncoated portion may be cut in the direction of the axis.

The welding target region may be radially arranged from a center of the core to the outer circumferential surface of the electrode assembly.

The welding target region may be arranged in a cross shape having a center on the core of the electrode assembly and extending outwards.

A current collector may be welded to the welding target region.

The current collector may be laser-welded or ultrasonic-welded to the welding target region.

A welding pattern between the current collector and the welding target region may include a pattern of a plurality of dots linearly arranged along the radial direction of the electrode assembly.

The uncoated portion may include, at a region adjacent to the core or the outer circumference of the electrode assembly, an uncoated cut portion in which a height of the uncoated cut portion in the direction of the axis is lower than that of a remaining region of the uncoated portion.

A portion of the uncoated portion remaining in the uncoated cut portion may not be bent.

A width of winding turns in a radial direction formed when the uncoated cut portion is wound may be greater than a bending length of the uncoated portion.

A height of the uncoated portion remaining in the uncoated cut portion may be 0.2 to 4 mm.

Prior to bending, a maximum height of the uncoated portion extending along the direction of the axis may be 12 mm.

A bending depth of the uncoated portion may be 1 mm to 5 mm.

Any electrode of the first electrode and the second electrode having the uncoated portion may include a pair of short sides along the direction of the axis, and the pair of short sides have the same length or different lengths.

Any electrode of the first electrode and the second electrode having the uncoated portion may include a pair of long sides along the winding direction, and the pair of long sides have the same length or different lengths.

In another aspect of the present disclosure, there is also provided a battery comprising: an electrode assembly, in which a first electrode, a second electrode, and a separator provided therebetween are wound about an axis to define a core and an outer circumferential surface of the electrode assembly, wherein at least one of the first electrode and the second electrode comprises, at a long side end portion, an uncoated portion exposed beyond the separator in a direction of the axis, wherein at least a part of the uncoated portion is bent in a radial direction of the electrode assembly to define a bent surface region having overlapping layers of the uncoated portion, and wherein the bent surface region comprises a welding target region having a number of the overlapping layers of the uncoated portion, the welding target region extending along a radial direction of the electrode assembly; a battery housing configured to accommodate the electrode assembly, the battery housing having a first end with an opening and a second end; a sealing body configured to seal the opening at the first end of the battery housing; a terminal having a surface externally exposed through the second end of the battery housing or the sealing body; a first current collector electrically connected to the welding target region of the uncoated portion of the first electrode and the terminal; and a second current collector electrically connected to the welding target region of the uncoated portion of the second electrode and the battery housing.

The terminal may be a rivet terminal disposed at a hole in the second end of the battery housing, and a sealing gasket may be disposed between the rivet terminal and the hole of the second end of the battery housing.

The rivet terminal may be welded to the first current collector.

The sealing body may include a cap crimped together with a sealing gasket at the opening of the first end of the battery housing, and the sealing gasket may be disposed between the cap and the opening of the first end of the battery housing to insulate the cap from the battery housing.

The battery housing may include a beading portion adjacent the opening of the first end of the battery housing, the sealing body may include a cap crimped together with a sealing gasket at the opening of the first end of the battery housing, and the second current collector may have at least a portion of an edge region arranged between the beading portion and the sealing gasket and contacting an inner surface of the beading portion.

The second current collector may have at least a portion of an edge region welded to the inner surface of the beading portion.

The cap may have no electrical polarity.

The welding target region may have an average number of overlapping layers of the uncoated portion that is 5 or greater along the radial direction of the electrode assembly.

In the welding target region, an average stacking thickness of the overlapping layers of the uncoated portion may be 25 µm or more.

The first current collector may include a first welding pattern formed by welding between the welding target region of the uncoated portion of the first electrode and the first current collector, and the second current collector may include a second welding pattern formed by welding between the welding target region of the uncoated portion of the second electrode and the second current collector.

The first welding pattern and the second welding pattern may start at a point spaced apart from a center of the core of the electrode assembly by 5 mm to 10 mm and extend along the radial direction of the electrode assembly.

The first welding pattern and the second welding pattern may start at a point spaced apart from a center of the core of the electrode assembly by substantially the same distance and extend along the radial direction of the electrode assembly.

The first welding pattern and the second welding pattern may have the same length or different lengths in the radial direction of the electrode assembly.

The first welding pattern and the second welding pattern may have different lengths in the radial direction of the electrode assembly.

The first welding pattern may be longer than the second welding pattern.

Before the uncoated portion is bent, a maximum height of the uncoated portion extending along the direction of the axis may be 12 mm.

Another part of the uncoated portion may not be bent and a boundary between the welding target region and the another part of the uncoated portion may be cut in the direction of the axis.

A bending depth of the uncoated portion may be 1 mm to 5 mm.

Each of the first electrode and the second electrode may include a pair of short sides along the direction of the axis, and the pair of short sides have the same length or different lengths.

Each of the first electrode and the second electrode may include a pair of long sides along the winding direction, and the pair of long sides have the same length or different lengths.

Resistance measured between the terminal and the second end of the battery housing may be 4 milliohms(mΩ) or less.

A ratio of diameter to a height of the battery may be greater than 0.4.

The technical solution according to the present disclosure may also be achieved by a battery pack including the battery described above and a vehicle including the battery pack.

### Advantageous Effects

According to an aspect of the present disclosure, even when a welding output is increased, damage to an active material layer or separator can be prevented by sufficiently securing a region where an uncoated portion is uniformly overlapped, in a radial direction of an electrode assembly, when the uncoated portions exposed at both ends of the electrode assembly are bent.

According to another aspect of the present disclosure, an electrolyte injection process and a welding process between a battery housing and a current collector can be easily performed by improving a structure of an uncoated portion adjacent to a core of an electrode assembly, thereby preventing a cavity in the core of the electrode assembly from being blocked when the uncoated portion is bent.

According to another aspect of the present disclosure, an electrode assembly in which energy density is improved and resistance is decreased can be provided by directly welding a bent surface region of an uncoated portion to a current collector, rather than using an electrode tab of a strip shape, thereby to reduce dead space.

According to another aspect of the present disclosure, a battery having a structure in which internal resistance is low and welding strength between a current collector and an uncoated portion is improved, and a battery pack and vehicle including the same, can be provided.

The present disclosure may have several other effects which will be described in each embodiment, and descriptions about an effect or the like that may be easily inferred by a person skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a plan view showing a structure of an electrode used when a tab-less cylindrical battery of the related art is manufactured.
FIG. 2 is a view showing an electrode winding process of a tab-less cylindrical battery of the related art.
FIG. 3 is a view showing a process of bending an uncoated portion, in a method of manufacturing a tab-less cylindrical battery of the related art.
FIG. 4 is a view showing a state in which a current collector is welded to a bent surface region of an uncoated portion, in a method of manufacturing a tab-less cylindrical battery of the related art.
FIG. 5 is a plan view showing a structure of an electrode, according to an embodiment of the present disclosure.
FIG. 6 is a cross-sectional view of an electrode assembly taken along in a winding axis direction (Y-axis), according to an embodiment of the present disclosure.
FIG. 7 is a view showing an uncoated portion exposed at an end portion of an electrode assembly, being bent from a core to an outer side, in an embodiment of the present disclosure.
FIG. 8 is a view showing an uncoated portion exposed at an end portion of an electrode assembly, being bent from an outer side to a core, in an embodiment of the present disclosure.
FIG. 9 is a diagram showing how the number of overlapping layers of an uncoated portion is changed according to a bending depth, when the uncoated portion exposed at an end portion of an electrode assembly is bent, according to an embodiment of the present disclosure.
FIG. 10 illustrates experiment results of comparing overlapping quality and a change in the average number of overlapping layers of an uncoated portion, according to directions in which a positive electrode uncoated portion and negative electrode uncoated portion of an electrode assembly are bent, in an embodiment of the present disclosure.
FIG. 11 is a diagram showing a bending region being pre-cut before an uncoated portion of an electrode assembly is bent, in an embodiment of the present disclosure.
FIG. 12 illustrates experiment results of comparing overlapping quality and a change in the average number of overlapping layers of an uncoated portion, according to bent directions and cutting of a positive electrode uncoated portion and negative electrode uncoated portion of an electrode assembly, in an embodiment of the present disclosure.
FIG. 13a is a cross-sectional view of a cylindrical battery taken along a winding axis direction (Y-axis), according to an embodiment of the present disclosure.
FIG. 13b is a top plan view showing the structure of a first current collector according to an embodiment of the present disclosure.
FIG. 13c is a top plan view showing the structure of a second current collector according to an embodiment of the present disclosure.
FIG. 14a is a cross-sectional view of a cylindrical battery taken along a winding axis direction (Y-axis), according to another embodiment of the present disclosure.
FIG. 14b is a top plan view showing the structure of a first current collector according to another embodiment of the present disclosure.
FIG. 14c is a perspective view showing the structure of a second current collector according to another embodiment of the present disclosure.
FIG. 15 is a top plan view showing a state where a plurality of cylindrical batteries according to an embodiment of the present disclosure are electrically connected.
FIG. 16 is a partially enlarged view of FIG. 15.
FIG. 17 is a view showing a battery pack including a cylindrical battery, according to an embodiment of the present disclosure.
FIG. 18 is a view showing a vehicle including a battery pack, according to an embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Further, to help understanding the present disclosure, the accompanying drawings are not shown in the actual scale, but dimensions of some components may be exaggerated. Also, like reference numerals may be assigned to like components in different embodiments.

When it is explained that two objects are identical, this means that these objects are 'substantially identical'. Accordingly, the substantially identical objects may include deviations considered low in the art, for example, deviations within 5%. Also, when it is explained that certain parameters are uniform in a predetermined region, this may mean that the parameters are uniform in terms of an average.

Although the terms "first", "second", or the like are used to describe various elements, these elements are not limited by these terms. These terms are only used to distinguish one element from other elements, and unless otherwise stated, the first component may be replaced with the second component.

Throughout the specification, unless otherwise stated, each element may be singular or plural.

Placing any component at an "upper portion (or, lower portion)" of or "on (or, below)" another component may mean not only that any component is disposed in contact with the upper surface (or, lower surface) of the component, but also that still another component may be interposed between the component and another component disposed on (or, below) the component.

Also, when it is described that a component is "connected", "coupled" or "accessed" to another component, these components may be directly connected or accessed to each other, but it should be understood that still another component may be "interposed" between these components, or these components are "connected", "coupled" or "accessed" through still another component.

Throughout the specification, when referring to "A and/or B", it means A, B, or A and B, unless specifically stated to the contrary, and when referring to "C to D", unless otherwise specified, it means that it is greater than or equal to C and less than or equal to D.

For convenience of description, in this specification, a direction along the longitudinal direction of a winding axis of an electrode assembly wound in the jelly roll shape is referred to as an axial direction Y. In addition, a direction surrounding the winding axis is referred to as a circumferential direction or a peripheral direction X. In addition, a direction closer to the winding axis or away from the winding axis is referred to as a radial direction. Among them, in particular, the direction closer to the winding axis is referred to as a centripetal direction, and the direction away from the winding axis is referred to as a centrifugal direction.

First, an electrode assembly according to an embodiment of the present disclosure will be described. The electrode assembly may be a jelly-roll type electrode assembly having a structure in which a first electrode and second electrode having sheet shapes, and a separator provided therebetween are wound in one direction.

The shape of the electrode assembly is not limited to the jelly roll type. Accordingly, the electrode assembly may have other known structures that may be employed in a cylindrical battery.

Preferably, at least one of the first electrode and the second electrode includes, at a long side end portion in a winding direction, an uncoated portion where an active material is not coated. At least a part of the uncoated portion in itself may be used as an electrode tab.

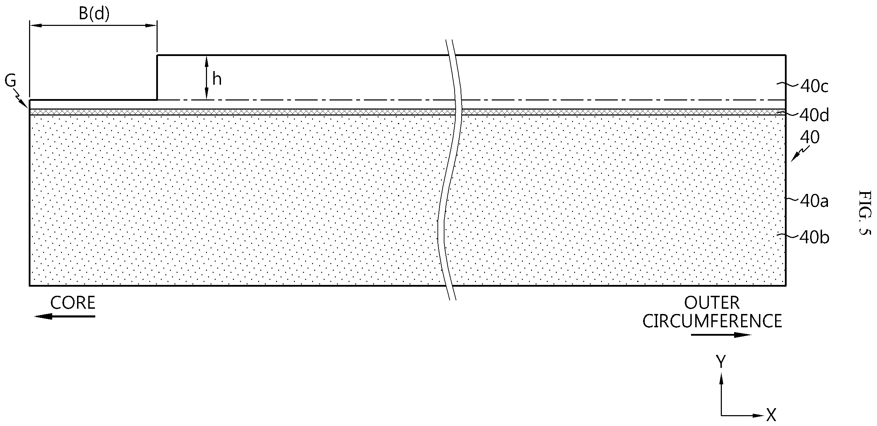

FIG. 5 is a plan view showing a structure of an electrode 40, according to an embodiment of the present disclosure.

Referring to FIG. 5, the electrode 40 includes a conductive substrate 40a formed of a metal foil, and an active material layer 40b. The electrode 40 has a pair of short sides and a pair of long sides extending between the pair of short sides. The pair of short sides extend along a winding axis direction Y, and the pair of long sides extend along a winding direction X. The pair of short sides may have the same length or different lengths, and the pair of long sides may also have the same length or different lengths.

The metal foil may be aluminum or copper, and is suitably selected according to polarity of the electrode 40. The active material layer 40b is formed on at least one surface of the conductive substrate 40a extending between a pair of short sides, and includes an uncoated portion 40c at a long side end portion in a winding direction X. The uncoated portion 40c is a region where an active material is not coated. An insulating coating layer 40d may be provided at a boundary between the active material layer 40b and the uncoated portion 40c. The insulating coating layer 40d is provided such that at least a portion thereof overlaps the boundary between the active material layer 40b and the uncoated portion 40c. The insulating coating layer 40d may include a polymer resin, and may include an inorganic filler, such as Al₂O₃. The polymer resin may have a porous structure. The insulating coating layer 40d may have a width of 0.3 mm to 5 mm in the winding axis direction Y. Since a part of the uncoated portion 40c in which the insulating coating layer 40d is formed is an area where the active material is not coated, the corresponding part may also be regarded as the uncoated portion.

Preferably, a portion of the uncoated portion 40c adjacent to a core may be cut via a notching process. In this case, even when the uncoated portion 40c is bent towards the core, the core of the electrode assembly is not blocked by a bent portion of the uncoated portion 40c. For reference, the core includes a cavity generated when a bobbin used when the electrode assembly is wound is removed. The cavity may be used as an electrolyte injection path or a path for inserting a welding jig. In the drawing, a dotted line indicates a location where the uncoated portion 40c is bent. The bending location may be changed.

A cutting portion B of the uncoated portion 40c forms a plurality of winding turns in a radial direction, when the electrode 40 is wound. The plurality of winding turns have a predetermined width in the radial direction. Preferably, a width d of the cutting portion B and a bending length h of the uncoated portion 40c may be adjusted such that the predetermined width is equal to or greater than the bending length h of the uncoated portion 40c. Accordingly, even when the uncoated portion 40c is bent, the core of the electrode assembly is not blocked due to bending of the uncoated portion 40c.

Alternatively, the width (d) of the cutting portion B and the bending length (h) of the uncoated portion 40c may be adjusted so that the core (cavity) of the electrode assembly is open to the outside by 90% or more based on its diameter.

It is preferable to provide a gap between a cutting line and the insulating coating layer 40d so as to prevent the active material layer 40b and/or the insulating coating layer 40d from being damaged while forming the cutting portion B of the uncoated portion 40c. The gap may be preferably 0.2 mm to 4 mm, more preferably 0.5 mm to 2 mm. When the gap is adjusted to the corresponding numerical range, the active material layer 40b and/or the insulating coating layer 40d may be prevented from being damaged by a cutting tolerance when the uncoated portion 40c is cut. Meanwhile, the cutting line of the cutting portion B is preferably spaced apart from the end of the active material layer 40b by 0.5 mm to 4 mm. When the separation distance is adjusted in the range of 0.5 mm to 4 mm, it is possible to prevent the active material layer 40b from being damaged by the cutting tolerance in the process of forming the cutting portion B of the uncoated portion 40c.

In a specific example, when the electrode 40 is used to manufacture an electrode assembly of a cylindrical battery having a form factor of 4680 (diameter: 46 mm, height: 80 mm), the width d of the cutting portion B may be set to 180 mm to 350 mm, depending on a diameter of the core of the electrode assembly.

When the core of the electrode assembly is not used for an electrolyte injection process, a welding process, or the like, the cutting portion B of the uncoated portion 40c may not be formed. In addition, the cutting portion B of the uncoated portion 40c may be formed at the outer circumference of the electrode 40. When the cutting portion B of the uncoated portion 40c is formed at the outer circumference of the electrode 40, it is possible to prevent the part of the uncoated portion 40c at the outer circumference of the electrode 40 from making electrical contact with the battery housing. This effect is useful when the polarity of the electrode 40 and the polarity of the battery housing are different.

The electrode 40 of the above-described embodiment may be applied to a first electrode and/or a second electrode having different polarities and included in the electrode assembly of the jelly-roll type. When an electrode structure of an embodiment is applied to any one of the first electrode and the second electrode, an electrode structure (FIG. 1) of the related art may be applied to the other one. Also, electrode structures applied to the first electrode and the second electrode may be different from each other.

In the present disclosure, an active material well-known in the related art may be unlimitedly used as a positive electrode active material coated on a positive electrode and a negative electrode active material coated on a negative electrode.

For example, the positive electrode active material may include an alkali metal compound represented by a general chemical formula A[AₓM_{y}]O_{2+z} (A includes at least one element from among Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤ 2, and 0.1 ≤ z ≤ 2; and stoichiometric coefficients x, y and z may be selected such that a compound maintains electrical neutrality).

As another example, the positive electrode active material may be an alkali metal compound xLiM¹O₂-(1-x)Li₂M²O₃ disclosed in US6,677,082, US6,680,143, and the like (M¹ includes at least one element having an average oxidation state 3; M² includes at least one element having an average oxidation state 4; and 0 ≤ x ≤ 1).

As another example, the positive electrode active material may be a lithium metal phosphate represented by a general chemical formula LiₐM¹ₓFe₁₋ₓM²_{y}P_{1-y}M³_{z}O_{4-z} (M¹ includes at least one element selected from Ti, Si, Mn, Co, Fe, V, Cr, Mo, Ni, Nd, Al, Mg, and Al; M² includes at least one element selected from Ti, Si, Mn, Co, Fe, Cr, Mo, Ni, Nd, Al, Mg, Al, As, Sb, Si, Ge, V, and S; M³ includes a halogenated element selectively including F; 0 < a ≤ 2, 0 ≤ x ≤ 1, 0 ≤ y < 1, and 0 ≤ z < 1; and stoichiometric coefficients a, x, y and z are selected such that a compound maintains electrical neutrality), or a general chemical formula Li₃M₂ (PO₄)₃ (M includes at least one element selected from Ti, Si, Mn, Fe, Co, V, Cr, Mo, Ni, Mg, and Al).

Preferably, the positive electrode active material may include a primary particle and/or a secondary particle in which primary particles are aggregated.

In an example, a negative electrode active material may use a carbon material, a lithium metal or lithium metal compound, a silicon or silicon compound, a tin or tin compound, or the like. A metal oxide, such as TiO₂ or SnO₂, having electric potential less than 2 V, may also be used as the negative electrode active material. Low crystalline carbon, high crystalline carbon, and the like may be used as the carbon material.

A separator may be a single or stack of a porous polymer film, for example, a porous polymer film made of a polyolefin-based polymer, such as ethylene homopolymer, a propylene homopolymer, an ethylene/butene copolymer, an ethylene/hexene copolymer, an ethylene/methacrylate copolymer, or the like. As another example, the separator may be a general porous non-woven fabric, for example, a non-woven fabric formed of glass fiber having a high melting point, polyethylene terephthalate fiber, and the like.

At least one surface of the separator may include a coating layer of an inorganic particle. Also, the separator itself may be a coating layer of an inorganic particle. Particles in the coating layer may have a structure being combined to a binder such that interstitial volume is present between adjacent particles.

The inorganic particle may be an inorganic material having a dielectric constant of 5 or greater. As an unlimited example, the inorganic particle may include at least one material selected from the group consisting of Pb (Zr,Ti)O₃ (PZT), Pb₁₋ₓLaₓZr_{1-y}Ti_{y}O₃ (PLZT), PB (Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

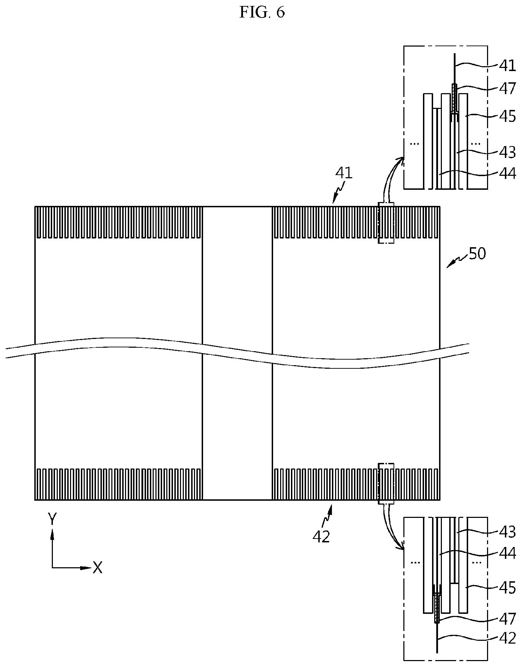

FIG. 6 is a cross-sectional view of an electrode assembly 50 of a jelly-roll type, in which the electrode 40 is applied to a first electrode (positive electrode) and a second electrode (negative electrode), taken along in a Y-axis, according to an embodiment of the present disclosure.

Referring to FIG. 6, the electrode assembly 50 may be manufactured via a winding method described in FIG. 2. An uncoated portion 41 protruding to an upper portion of the electrode assembly 50 extends from a first electrode 43. An uncoated portion 42 protruding to a lower portion of the electrode assembly 50 extends from a second electrode 44. A separator 45 is provided between the first electrode 43 and the second electrode 44. A length of an active material coating region of the first electrode 43 in a Y-axis direction may be less than a length of an active material coating region of the second electrode 44 in the Y-axis direction. Accordingly, the active material coating region of the second electrode 44 may extend along the Y-axis direction longer than the active material coating region of the first electrode 43.

Preferably, an insulating coating layer 47 formed on a boundary between an uncoated portion and active material regions of the first electrode 43 and second electrode 44 may extend up to an end portion of the separator 45 or may be externally exposed from the end portion thereof. When the insulating coating layer 47 is exposed to the outside of the separator 45, the insulating coating layer 47 may support bending points when the uncoated portions 41 and 42 are bent. When the bending points are supported, the stress applied toward the active material layer and the separator 45 when the uncoated portions 41 and 42 are bent is alleviated. Also, the insulating coating layer 47 may prevent the first electrode 43 and the second electrode 44 from generating a short circuit by contacting each other. The end of the insulating coating layer 47 may be exposed beyond the end of the separator 45 by a length of more than 0 and not more than 2 mm along the winding axis direction Y.

The first electrode 43 includes a conductive substrate and an active material coating layer formed on at least one surface thereof. The conductive substrate (uncoated portion 41) is made of aluminum and may have a thickness of 10 µm to 25 µm. The first electrode 43 including the active material coating layer may have a thickness of 180 µm to 220 µm. The second electrode 44 includes a conductive substrate and an active material coating layer formed on at least one surface thereof. The conductive substrate (uncoated portion 42) is made of copper and may have a thickness of 5 µm to 20 µm. The second electrode 44 including the active material coating layer may have a thickness of 140 µm to 180 µm. The separator 45 is interposed between the first electrode 43 and the second electrode 44, and may have a thickness of 8 µm to 18 µm.

In a winding structure of the first electrode 43, an interval of the uncoated portions 41 located at an adjacent winding turn in the radial direction may be 350 µm to 380 µm. Also, in a winding structure of the second electrode 44, an interval of the uncoated portions 42 located at an adjacent winding turn in the radial direction may be 350 µm to 380 µm.

In the electrode assembly 50, the number of winding turns of the first electrode 43 varies depending on a form factor of a cylindrical battery, and may be 48 to 56. The number of winding turns of the second electrode 44 also varies depending on the form factor of the cylindrical battery, and may be 48 to 56.

The uncoated portions 41 and 42 are longer than an uncoated portion applied to a design of a small cylindrical battery. Preferably, the uncoated portions 41 and 42 may be 6 mm or greater, selectively 7 mm or greater, selectively 8 mm or greater, selectively 9 mm or greater, selectively 10 mm or greater, selectively 11 mm or greater, or selectively 12 mm or greater.

Preferably, the uncoated portions 41 and 42 may be bent in the radial direction of the electrode assembly 50, more preferably from an outer side of the electrode assembly 50 to a core thereof.

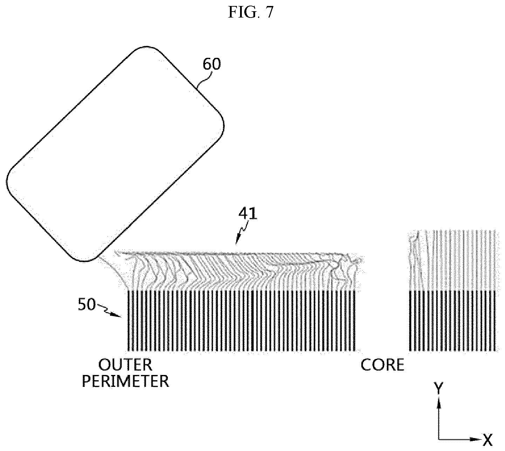

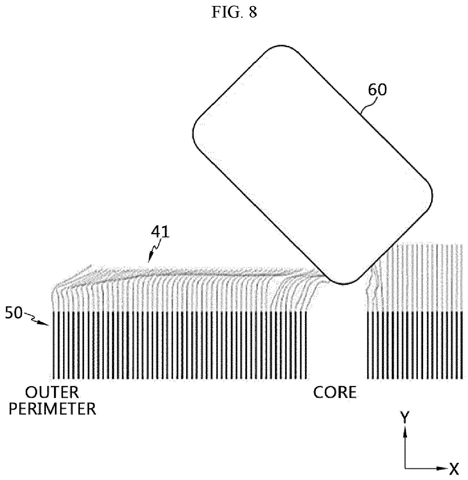

FIG. 7 is a view showing the uncoated portion 41 of the electrode assembly 50 being bent from a core to an outer side, by using a forming jig 60. FIG. 8 is a view showing the uncoated portion 41 of the electrode assembly 50 being bent from the outer side to the core, by using the forming jig 60. In the embodiment, a material of the uncoated portion 41 is set to aluminum, a thickness thereof is set to 10 µm, a length thereof in a winding axis direction is set to 8 mm, and a bending depth thereof is set to 2 mm. The bending depth corresponds to a height difference before and after the uncoated portion 41 is bent. The height after the uncoated portion 41 is bent is the height of the bent surface region. A criterion point of the height may be a boundary point between the active material coating layer and the uncoated portion 41.

Referring to FIGS. 7 and 8, when the uncoated portion 41 is bent from the core to the outer side, severe buckling of the uncoated portion 41 occurs near the core. On the other hand, when the uncoated portion 41 is bent from the outer side to the core, a buckling phenomenon of the uncoated portion 41 is mostly alleviated. When the buckling of the uncoated portion 41 is severe, stress is focused on a boundary between the uncoated portion 41 and an active material layer, and thus a conductive substrate may be cracked. Moreover, an end portion of the uncoated portion 41 may not overcome the stress, and thus may be torn. In addition, when the uncoated portion 41 is torn, a separator may be torn together, thereby inducing a micro short circuit between the first electrode 43 and the second electrode 44. The buckling of the uncoated portion 41 is mainly caused by a curvature being reversed when the uncoated portion 41 is bent. Referring to FIGS. 7 and 8, it is preferable that the uncoated portion 41 is bent from the outer side to the core of the electrode assembly 50. Similarly, it is preferable that the uncoated portion 42 is also bent from the outer side to the core of the electrode assembly 50.

Meanwhile, the uncoated portions 41 and 42 are distorted near the core of the electrode assembly 50. If the cutting portion B (FIG. 5) is formed in the uncoated portions 41 and 42 near the core and the uncoated portion is not bent near the core, it is possible to prevent the uncoated portions 41 and 42 from being distorted.

In an alternative embodiment, when the cutting portion B or a similar structure is applied near the core of the electrode assembly 50, the uncoated portions 41 and 42 may be bent from the core toward the outer side of the electrode assembly 50.

Preferably, the bending depth of the uncoated portions 41 and 42 may be at least 1 mm or greater, selectively 1.5 mm or greater, selectively 2 mm or greater, selectively 2.5 mm or greater, selectively 3 mm or greater, selectively 3.5 mm or greater, selectively 4 mm or greater, selectively 4.5 mm or greater, or selectively 5 mm or greater.

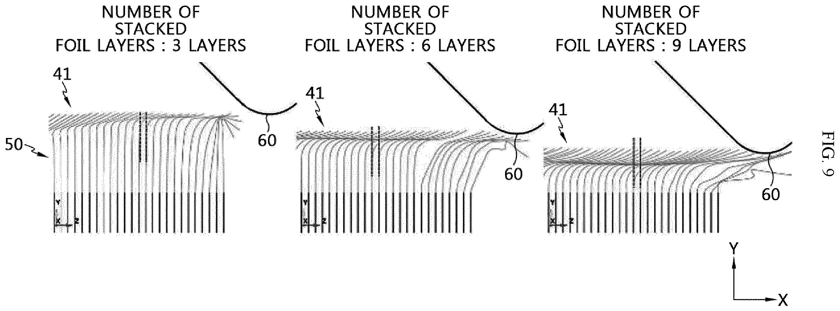

FIG. 9 illustrates results of measuring how the number of overlapping layers of the uncoated portion 41 is changed when the bending depth is changed to 1 mm, 2mm, and 3 mm, when the end portion of the uncoated portion 41 is bent by using the forming jig 60. A material, length, and thickness of the uncoated portion 41 are same as experiment conditions described above.

Referring to FIG. 9, when the bending depth of the uncoated portion 41 is 1 mm, the number of overlapping layers of the uncoated portion 41 is 3 at a radius center (an area indicated by vertical dotted lines) of the electrode assembly 50. When the bending depth of the uncoated portion 41 is 2 mm, the number of overlapping layers of the uncoated portion 41 is 6 at the radius center of the electrode assembly 50. When the bending depth of the uncoated portion 41 is 3 mm, the number of overlapping layers of the uncoated portion 41 is 9 at the radius center of the electrode assembly 50. The number of overlapping layers of an uncoated portion according to a bending depth of three conditions is about 3 times the bending depth. Accordingly, it is obvious to one of ordinary skill in the art that when the bending depth of the uncoated portion 41 is greater than 3 mm, the number of overlapping layers of the uncoated portion 41 at the radius center of the electrode assembly 50 is greater than 9.

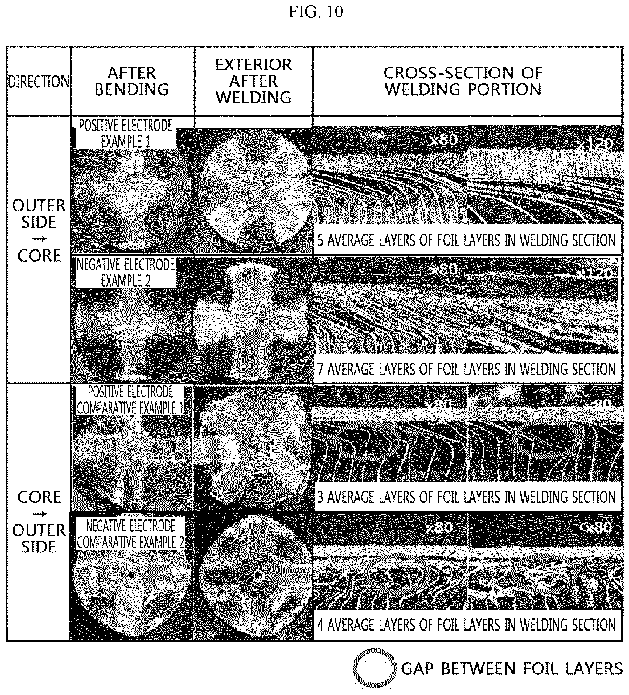

FIG. 10 are close-up photographs of upper portions of electrode current collectors and photographs of cross-sections of welding points taken by an optical microscope, when current collectors are laser-welded after bending uncoated portions while differently adjusting the numbers of overlapping layers of the uncoated portions.

Among the photographs of the upper portions of the current collectors, the left photographs are photographs after a bending process, and right photographs are photographs after the current collectors are welded. In the photographs of the cross-sections of the welding portions, the left photographs are 80 magnification photographs and the right photographs are 120 magnification photographs. In Examples 1 and 2, the uncoated portions are bent from an outer side to a core. On the other hand, in Comparative Examples 1 and 2, the uncoated portions are bent from the core to the outer side.

(Examples 1 and 2) Bending depths of the uncoated portion at a positive electrode and uncoated portion at a negative electrode are respectively set to 3 mm and 3 mm, when the uncoated portions are bent from the outer side to the core of an electrode assembly. A material, length, and thickness of the positive electrode uncoated portion are respectively aluminum, 8 mm, and 10 µm, and a material, length, and thickness of the negative electrode uncoated portion are respectively copper, 8 mm, and 15 µm.

(Comparative Examples 1 and 2) Bending depths of the uncoated portion at a positive electrode and uncoated portion at a negative electrode are respectively set to 3 mm and 3 mm, when the uncoated portions are bent from the core to the outside of the electrode assembly. A material, length, and thickness of the positive electrode uncoated portion are respectively aluminum, 8 mm, and 10 µm, and a material, length, and thickness of the negative electrode uncoated portion are respectively copper, 8 mm, and 15 µm.

Referring to FIG. 10, in Comparative Examples 1 and 2, it is identified that the number of average overlapping layers of the positive electrode uncoated portion and negative electrode uncoated portion calculated within welding sections of the current collectors are respectively 3 and 4, and that, seeing the bent portions, empty spaces (gaps) of large volume are present between the uncoated portions.

In the present disclosure, the average number of overlapping layers is determined by setting measurement points in intervals of 1 mm in a welding section and calculating an average of the number of overlapping layers identified at the measurement points. An overlapping surface of the layers of the uncoated portion may be substantially perpendicular to the winding axis direction. The number of overlapping layers means the number of overlapping layers of the uncoated portion through which an imaginary line passes when the imaginary line is drawn at the measurement point in parallel to the winding direction.

In Comparative Examples 1 and 2, the number of overlapping layers of the uncoated portion is low, and thus when an output of a laser is increased to improve welding strength, a laser beam may penetrate into the electrode assembly by passing through an overlapping region of the uncoated portion. Accordingly, there is a limit in increasing welding strength of a welding region up to a desired level. A cylindrical battery having a form factor of 4680 may be mounted on a vehicle or the like. When the vehicle is driven, vibration is continuously applied to the cylindrical battery, and when a period of use of the cylindrical battery is increased, a swelling phenomenon occurs. Accordingly, stress at a welding point between a current collector and a bent surface region of an uncoated portion is increased, thereby causing a crack on a welding interface or the like. Comparative Examples 1 and 2 are vulnerable to such issues.

Also, as in Comparative Examples 1 and 2, when there is the empty space (gap) of the large volume between the overlapping layers of the uncoated portion, the laser beam is unable to be masked by an overlapping region of the uncoated portion and may penetrate into the electrode assembly, thereby ablating a separator or an active material layer.

On the other hand, in Examples 1 and 2, it is identified that the average number of overlapping layers of the positive electrode uncoated portion and negative electrode uncoated portion calculated within welding sections of the current collectors are respectively 5 and 7, and that empty spaces (gaps) between the uncoated portions are remarkably reduced. Accordingly, compared to Comparative Examples 1 and 2, Examples 1 and 2 have excellent welding strength, excellent vibration resistance, and excellent masking effects of a laser beam.

Referring to the comparison experiment results shown in FIG. 10, the bent surface region formed when the uncoated portion is bent from the outer side to the core of the electrode assembly may be substantially flat and may include a welding target region in which the average number of overlapping layers of the uncoated portion is 5 or greater, selectively 6 or greater, selectively 7 or greater, selectively 8 or greater, selectively 9 or greater, or selectively 10 or greater.

Preferably, the bent surface region may include a welding target region in which the number of overlapping layers of the uncoated portion is 5 or more and 15 or less.

In the bent surface region, the average number of overlapping layers may be determined to a desired value by adjusting the length and bending depth of the uncoated portion based on the interval of the uncoated portions protruding from the adjacent winding turns in the radial direction of the electrode assembly.

In one example, if the interval of the uncoated portion is 350 µm in a radial direction of the electrode assembly and the bending depth is 3 mm, the bent portion of the uncoated portion extending from the bending point toward the core has a length of approximately 3 mm. In addition, the bent portion of the uncoated portion overlaps with an uncoated portion protruding from the radius region corresponding to at least 8 winding turns (3 mm / 350 µm = 8.57) inside the bending point. Therefore, the average number of overlapping layers of the uncoated portion in the corresponding radius region may be adjusted to the level of about 8.

The optimal average number of overlapping layers may be determined adaptively by trial and error in consideration of the laser power used for welding, the material and thickness of the uncoated portion, and the interval of the uncoated portion between adjacent winding turns.

In the bent surface region, the region where the average number of overlapping layers of the uncoated portion is 5 or more may be defined as a welding target region where the current collector is welded. The welding target region extends along the radial direction of electrode assembly 50. Also, the welding target region includes overlapping layers of the uncoated portion. Here, "overlapping" means that the uncoated portion is stacked in multiple layers along the winding axis direction. When the bent surface region is formed by the uncoated portion 41 of the first electrode 43, the average stacking thickness of the overlapping layers of the uncoated portion 41 in the welding target region may be 50 µm or more. This is because the thickness of the uncoated portion 41 is preferably 10 µm to 25 µm. Similarly, when the bent surface region is formed by the uncoated portion 42 of the second electrode 44, the average stacking thickness of the overlapping layers of the uncoated portion 42 in the welding target region may be 25 µm or more. This is because the thickness of the uncoated portion 42 is preferably 5 µm to 20 µm. Meanwhile, the upper limit of the average stacking thickness of the uncoated portions 41 and 42 in the welding target region may be determined by the upper limit of the average number of overlapping layers. That is, the upper limit of the average stacking thickness may be determined by a value obtained by multiplying the upper limit of the average number of overlapping layers and the maximum thickness values of the uncoated portions 41 and 42.

Preferably, in a radial direction of the electrode assembly 50, a ratio of a length of the welding target region, in which the number of overlapping layers is 5 or greater, to a radius of an electrode assembly may 50 be designed to be 30% or greater, selectively 40% or greater, selectively 50% or greater, selectively 60% or greater, selectively 70% or greater, or selectively 80% or greater.

Preferably, in a radial direction of the electrode assembly 50, the ratio of the length of the welding target region in which the number of overlapping layers is 5 or more may be 30% or more and 90% or less based on the radius of the electrode assembly 50.

Referring to FIG. 10, the welding target region is defined in the bent surface region formed when at least a part of the uncoated portion is bent in the radial direction of the electrode assembly. The welding target region may radially extend based on the core of the electrode assembly. The other part of the uncoated portion other than the welding target region may not be bent. A surface height of the welding target region is lower than that of remaining regions. The welding target region may have a groove structure extending radially toward the outside from the core center of the electrode assembly. In an example, the groove structure shown in FIG. 10 has a cross shape. A welding pattern formed on the welding target region may include a plurality of welding dots arranged along a radius direction of the electrode assembly. The welding dots may be arranged in the radius direction, in at least one row, preferably in at least two rows. The welding dot corresponds to a welding bead generated by laser welding. The welding bead is a solidified material of a metal melted by a laser. A shape of the current collector welded to the welding target region may correspond to a shape of the welding target region. Also, a hole may be provided at a center of the current collector so as to communicate with a cavity in the core of the electrode assembly 50.

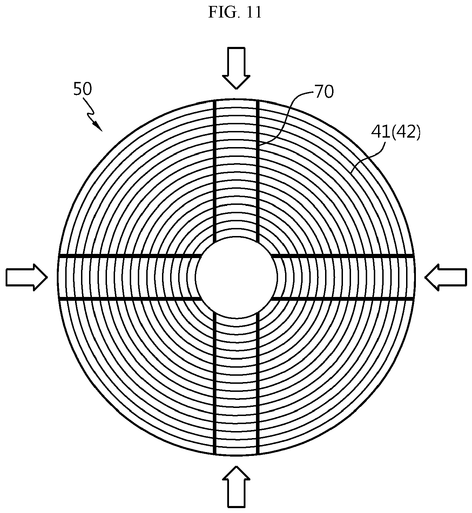

Preferably, regions of the uncoated portions 41 and 42 of the electrode assembly 50, which are to be bent, may be pre-cut to a predetermined depth. The cutting depth may be 1 mm to 5 mm. A location where cutting is performed is a boundary between the welding target region and a remaining region. FIG. 11 is a diagram showing the pre-cut region of the uncoated portion 41 or 42, which is to be bent. A concentric circle conceptually shows the uncoated portion 41 or 42, and the uncoated portion 41 or 42 is actually wound in a spiral shape. When the uncoated portion 41 or 42 is cut, a cutting line 70 is formed. The uncoated portion 41 or 42 may be cut up to a bending point. An ultrasonic cutting method or a laser cutting method may be applied when cutting the uncoated portion 41 or 42. Other methods used to notch a metal foil may be unlimitedly used. When the uncoated portion 41 or 42 is cut, stress generated when the uncoated portion 41 or 42 is bent in a direction indicated by an arrow is alleviated, and thus the number of overlapping layers of the uncoated portion in the welding target region becomes uniform, and the volume of empty space (gap) in the region where the uncoated portion is overlapped is remarkably reduced.

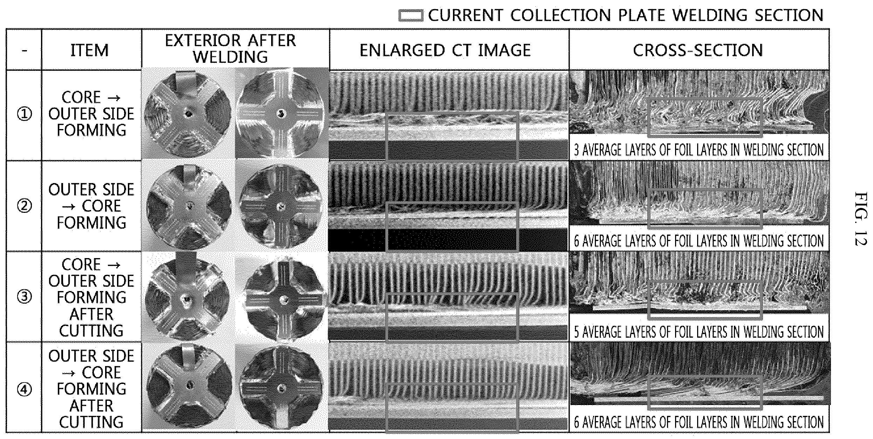

FIG. 12 illustrates comparison experiment results clearly showing differences when bending is performed after the uncoated portions 41 and 42 are cut and when bending is performed without cutting the uncoated portions 41 and 42.

In a third column of a table, left photographs are photographs of upper portions of positive electrode uncoated portions, and right photographs are photographs of upper portions of negative electrode uncoated portions. CT images shown in a fourth column of the table are images of cross-sections captured by using a CT device, by cutting welding portions of the positive electrode uncoated portions. Cross-sectional photographs in a fifth column of the table are photographs taken by an optical microscope by cutting welding portions of the negative electrode uncoated portions.

Example ① is a case where an uncoated portion is bent from a core to an outer side without cutting a bending region, and the average number of overlapping layers in a welding region is 3. Example ① is substantially the same as Comparative Example 1 described above. In a region where the uncoated portion is overlapped, the uncoated portion is irregularly deformed, and an empty space of large volume is identified in the overlapping region of the uncoated portion.

Example ② is a case where an uncoated portion is bent from an outer side to a core without cutting a bending region, and the average number of overlapping layers in a welding region is 6. A bending depth, material, length, and thickness of the uncoated portion are substantially the same as Example ①. A deformation degree of the uncoated portion in a region where the uncoated portion is overlapped is not greater than Example ①, and an empty space (gap) is relatively small compared to Example ①.

Example ③ is a case where an uncoated portion is bent from a core to an outer side after cutting a bending region, and the average number of overlapping layers in a welding region is 5. A material and thickness of the uncoated portion are the same as those of Example ①, and a cutting depth of the uncoated portion is 2 mm. Although the bending region is cut, it is identified that the uncoated portion is irregularly deformed in a region where the uncoated portions are overlapped. Meanwhile, volume of the empty space (gap) in the overlapping region of the uncoated portion is slightly reduced.

Example ④ is a case where an uncoated portion is bent from an outer side to a core after cutting a bending region, and the average number of overlapping layers in a welding region is 6. A material and thickness of the uncoated portion are the same as those of Example ②, and a cutting depth of the uncoated portion is 2 mm. It is identified that the volume of the empty space (gap) in the overlapping region of the uncoated portion is the smallest, as the bending region is pre-cut and thus the uncoated portion is more uniformly overlapped in a welding region than Example ②.

Various electrode assembly structures according to embodiments (modifications) of the present disclosure may be applied to a cylindrical battery of a jelly-roll type.

Preferably, the cylindrical battery may be, for example, a cylindrical battery in which a ratio of a form factor (a value obtained by dividing a diameter of the cylindrical battery by a height thereof, i.e., a ratio of diameter Φ to a height H) is greater than about 0.4.

Here, the form factor denotes a value indicating the diameter and height of the cylindrical battery. The cylindrical battery according to an embodiment of the present disclosure may be, for example, a 46110 battery, a 4875 battery, a 48110 battery, a 4880 battery, or a 4680 battery. In a numerical value indicating the form factor, first two numbers indicate a diameter of a battery, and the remaining numbers indicate a height of the battery.

When an electrode assembly having a tab-less structure is applied to a cylindrical battery in which a ratio of a form factor exceeds 0.4, an uncoated portion is easily torn due to large stress applied in a radius direction when the uncoated portion is bent. Also, when a current collector is welded to a bent surface region of the uncoated portion, it is required to sufficiently increase the number of overlapping layers of the uncoated portion so as to sufficiently secure welding strength and decrease resistance. Such a requirement may be achieved by an electrode and an electrode assembly according to embodiments (modifications) of the present disclosure.

A battery according to an embodiment of the present disclosure may be a cylindrical battery in which a diameter is about 46 mm, a height is about 110 mm, and a ratio of a form factor is 0.418.

A battery according to another embodiment may be a cylindrical battery in which a diameter is about 48 mm, a height is about 75 mm, and a ratio of a form factor is 0.640.

A battery according to another embodiment may be a cylindrical battery in which a diameter is about 48 mm, a height is about 110 mm, and a ratio of a form factor is 0.436.

A battery according to another embodiment may be a cylindrical battery in which a diameter is about 48 mm, a height is about 80 mm, and a ratio of a form factor is 0.600.

A battery according to another embodiment may be a cylindrical battery in which a diameter is about 46 mm, a height is about 80 mm, and a ratio of a form factor is 0.575.

In the related art, batteries, in which a ratio of a form factor is about 0.4 or less, are used. In other words, in the related art, for example, an 1865 battery, a 2170 battery, and the like are used. In the 1865 battery, a diameter thereof is about 18 mm, a height thereof is about 65 mm, and a ratio of a form factor is 0.277. In the 2170 battery, a diameter thereof is about 21 mm, a height thereof is about 70 mm, and a ratio of a form factor is 0.300.

Hereinafter, a cylindrical battery according to an embodiment of the present disclosure will be described in detail.

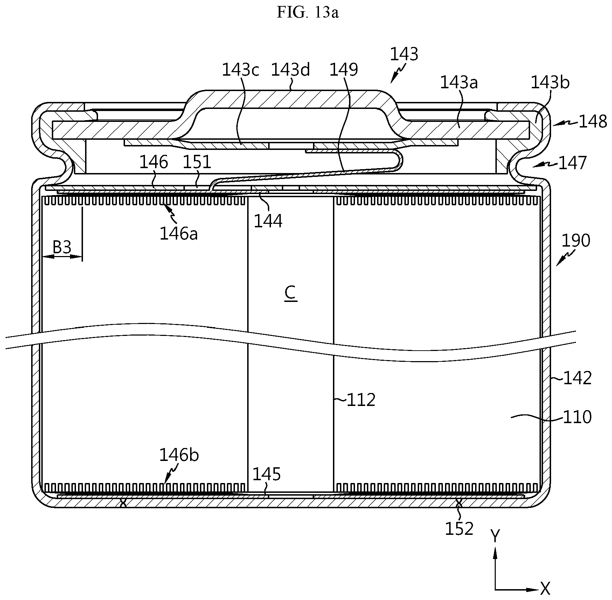

FIG. 13a is a cross-sectional view of a cylindrical battery 190 taken along a Y-axis direction, according to an embodiment of the present disclosure.

Referring to FIG. 13a, the cylindrical battery 190 according to an embodiment of the present disclosure includes an electrode assembly 110 including a first electrode, a separator, and a second electrode, a battery housing 142 accommodating the electrode assembly 110 and having a first end and a second end respectively at an upper portion and a lower portion thereof, and a sealing body 143 sealing an opening of the battery housing 142.

The battery housing 142 is a cylindrical container having an opening at the first end and a closed portion (bottom) at the second end that is opposite to the first end. The battery housing 142 is formed of a conductive metal material, such as aluminum, steel, stainless steel or the like. The battery housing 142 accommodates the electrode assembly 110 in an internal space through the opening at the first end and also accommodates an electrolyte.

The electrolyte may be salt having a structure such as A⁺B⁻. Here, A⁺ includes an ion including alkali metal positive ion, such as Li⁺, Na⁺, and K⁺, or a combination thereof. Also, B⁻ includes one or more negative ions selected from the group consisting of F⁻, Cl⁻, Br⁻, I⁻, NO₃⁻, N (CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂ (CF₃)₂CO⁻, (CF₃SO₂)₂CH⁻, (SF₅)₃C⁻, (CF₃SO₂)₃C⁻, CF₃ (CF₂)₇SO₃⁻, CF₃CO₂⁻, CH₃CO₂⁻, SCN^{-,} and (CF₃CF₂SO₂)₂N⁻.

The electrolyte may also be used by being dissolved in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a compound thereof.

The electrode assembly 110 may have a jelly-roll shape, but the present disclosure is not limited thereto. As shown in FIG. 2, the electrode assembly 110 may be manufactured by winding, based on a winding axis, a stack structure formed by sequentially stacking, at least one time, a lower separator, a first electrode, an upper separator, and a second electrode.

The first electrode and the second electrode have different polarities. In other words, when one has a positive polarity, the other one has a negative polarity. At least one of the first electrode and the second electrode may have an electrode structure according to the above-described embodiments (modifications). Also, the other one of the first electrode and the second electrode may have an electrode structure of the related art or the electrode structure according to the embodiments (modifications).

An uncoated portion 146a of the first electrode and an uncoated portion 146b of the second electrode respectively protrude to the outside from an end of the separator at an upper portion and a lower portion of the electrode assembly 110.

The sealing body 143 may include a cap 143a having a plate shape with a protruding center portion, a sealing gasket 143b providing air-tightness between the cap 143a and the battery housing 142 and having insulating property, and a connection plate 143c electrically and mechanically combined to the cap 143a.

The cap 143a is a component formed of a conductive metal material and covers the opening of the battery housing 142. The cap 143a is electrically connected to the uncoated portion 146a of the first electrode and is electrically insulated from the battery housing 142 via the sealing gasket 143b. Accordingly, the cap 143a may function as a first electrode terminal of the cylindrical battery 190.

The cap 143a is mounted on a beading portion 147 formed in the battery housing 142 and is fixed by a crimping portion 148. The sealing gasket 143b may be provided between the cap 143a and the crimping portion 148 so as to secure air-tightness of the battery housing 142 and secure electrical insulation between the battery housing 142 and the cap 143a. The cap 143a may include a protruding portion 143d formed by protruding upward from a center portion thereof.

The battery housing 142 is electrically connected to the uncoated portion 146b of the second electrode. Accordingly, the battery housing 142 has a same polarity as the second electrode. When the second electrode has a negative polarity, the battery housing 142 also has a negative polarity.

The battery housing 142 includes the beading portion 147 and the crimping portion 148 at an upper end thereof. The beading portion 147 is formed by pressing in an outer circumference of the battery housing 142. The beading portion 147 prevents an electrode assembly 110 accommodated inside the battery housing 142 from escaping through the upper opening portion of the battery housing 142, and may function as a support portion where the sealing body 143 is mounted.

The crimping portion 148 is formed on an upper portion of the beading portion 147. The crimping portion 148 has a shape bent into the battery housing 142 to surround an outer circumference of the cap 143a arranged on the beading portion 147, and at least a part of a top surface of the cap 143a.

The cylindrical battery 190 may further include a first current collector 144 and/or a second current collector 145 and/or an insulator 146.

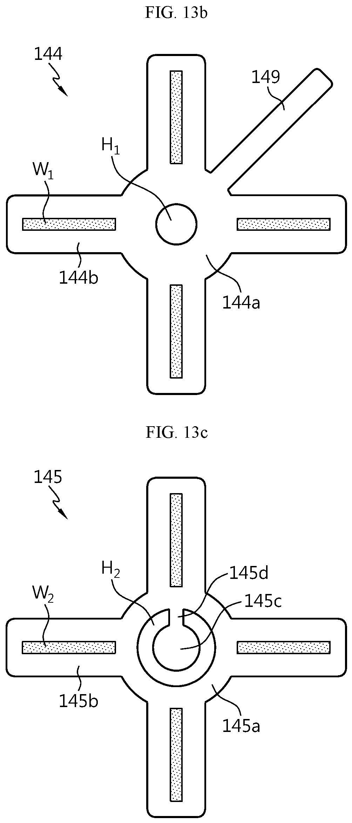

FIGS. 13b and 13c are top plan views showing the structures of the first current collector 144 and the second current collector 145, respectively.

Referring to FIGS. 13a and 13b, the first current collector 144 is combined to an upper portion of the electrode assembly 110. The first current collector 144 is formed of a conductive metal material, such as aluminum, copper, nickel, or the like, and is welded to a welding target region of a bent surface region formed as the uncoated portion 146a of the first electrode is bent. The welding target region may have a radial groove structure as shown in FIGS. 10 and 12. The radial groove structure may extend from the center of the core of the electrode assembly 110 to the outer side.

Preferably, the average number of overlapping layers of the uncoated portion 146a of the welding target region may be 5 or greater. In addition, the welding target region may have an average stacking thickness of the overlapping layers of the uncoated portion 146a that is 50 µm or more.

The first current collector 144 may have a structure that may be seated in the groove structure of the welding target region. In one example, when the welding target region has a cross-shaped groove structure as shown in FIGS. 10 and 12, the first current collector 144 may also be a cross-shaped plate.

The first current collector 144 may include a support portion 144a, a plurality of leg portions 144b extending outward from the support portion 144a, and a lead 149 extending outward from the support portion 144a between adjacent leg portions 144b.

The support portion 144a may be seated near the core of the electrode assembly 110, and the plurality of leg portions 144b may be welded to the welding target region of the bent surface region while being seated on the bent surface region.

A hole (H₁) is provided in the center of the support portion 144a. The electrolyte may be injected through the hole (H₁). The diameter of the hole (H₁) is at least 0.5 times of the diameter of the cavity in the core of the electrode assembly 110. If the diameter of the hole (H₁) is smaller than the diameter of the cavity in the core, it is possible to prevent the electrode or the separator from coming out through the cavity of the core when a vent occurs in the cylindrical battery 190. In addition, if the diameter of the hole (H₁) is equal to or larger than the diameter of the cavity in the core, the welding jig may be easily inserted in the process of welding the second current collector 145 to the bottom of the battery housing 142 and the electrolyte may be injected smoothly.

The lead 149 may extend to an upper part of the electrode assembly 110 to be combined to the connection plate 143c or directly combined to a bottom surface of the cap 143a. The connection plate 143c may be combined to a lower surface of the cap 143a. The connection between the lead 149 and another component may be achieved via welding.

The electrical connection between the bent surface region of the uncoated portion 146a and the first current collector 144 may be achieved via, for example, laser welding. The laser welding may be performed by partially melting a current collector base material. The laser welding may be replaced by resistance welding, ultrasonic welding or the like.

Referring to FIGS. 13a and 13c, the second current collector 145 having a plate shape may be coupled to a lower surface of the electrode assembly 110.

The second current collector 145 may include a support portion 145a having a hole (H₂) formed therein, a plurality of leg portions 145b extending outward from the support portion 145a, a connection portion 145c provided inside the hole (H₂) and coupled to the bottom surface of the battery housing 142, and a bridge portion 145d for connecting the connection portion 145c and the support portion 145a.

The second current collector 145 is made of a conductive metal material such as aluminum, copper, nickel or the like. The support portion 145a is seated near the core on the lower surface of the electrode assembly 110. The plurality of leg portions 145b are welded to the welding target region of the bent surface region formed while the uncoated portion 146b is bent. The connection portion 145c may be welded onto the inner bottom surface of the battery housing 142.

The diameter of the connection portion 145c is larger than the diameter of the cavity in the core of the electrode assembly 110. The bridge portion 145d connects the inner surface of the hole (H₂) and the outer surface of the connection portion 145c. The bridge portion 145d buffers vibration or stress when vibration or stress is applied to the second current collector 145. The width or thickness of the bridge portion 145d may be partially reduced. Then, when the overcurrent flows through the bridge portion 145d, the bridge portion 145d may melt and break, thereby blocking the overcurrent.

The welding target region defined in the bent surface region of the lower surface of the electrode assembly 110 may have a radial groove structure as shown in FIGS. 10 and 12. The radial groove structure may extend from the center of the core of the electrode assembly 110 to the outer side.

Preferably, the welding target region may have an average number of overlapping layers of the uncoated portion 146b that is 5 or more. In addition, the welding target region may have an average stacking thickness of the overlapping layers of the uncoated portion 146a that is 25 µm or more.

The leg portions 145b of the second current collector 145 may have a structure capable of being seated in the groove structure of the radially extending welding target region. In one example, when the welding target region has a cross-shaped groove structure as shown in FIGS. 10 and 12, the leg portions 145b of the second current collector 145 may also extend from the support portion 145a in a cross shape.

Referring to FIGS. 13b and 13c, the welding pattern (W₁) formed on the leg portion 144b of the first current collector 144 and the welding pattern (W₂) formed on the leg portion 145b of the second current collector 145 may start from a point spaced apart from the center of the core of the electrode assembly 110 by substantially the same distance and extend in the radial direction. The radial length of the welding pattern (W₁) may be the same as or different from the radial length of the welding pattern (W₂). The welding patterns (W₁, W₂) may be continuous welding beads or an arrangement of discontinuous welding beads.

Referring to FIG. 13a, the insulator 146 may cover the first current collector 144. The insulator 146 may cover the first current collector 144 at a top surface of the first current collector 144, thereby preventing a direct contact between the first current collector 144 and an inner peripheral surface of the battery housing 142.

The insulator 146 includes a lead hole 151 for the lead 149 extending upward from the first current collector 144 to be drawn out. The lead 149 is drawn out upward through the lead hole 151 to be combined to a bottom surface of the connection plate 143c or a bottom surface of the cap 143a.

An edge circumferential region of the insulator 146 is arranged between the first current collector 144 and the beading portion 147 so as to fix a combined body of the electrode assembly 110 and first current collector 144. Accordingly, movement of the combined body of the electrode assembly 110 and first current collector 144 in a height direction of the cylindrical battery 190 is limited, and thus assembly stability of the cylindrical battery 190 may be improved.

The insulator 146 may be formed of an insulating polymer resin. For example, the insulator 146 may be formed of polyethylene, polypropylene, polyimide, or polybutylene terephthalate.

The battery housing 142 may further include a venting portion 152 formed at a bottom surface thereof. The venting portion 152 corresponds to a region having a less thickness compared to a peripheral region thereof among the bottom surface of the battery housing 142. In order to form the vent portion 152, an upper and/or lower surface of the bottom of the batter can 142 may be mechanically notched. The venting portion 152 is structurally vulnerable compared to the peripheral region thereof. Accordingly, when internal pressure increases to a certain level or higher due to occurrence of abnormality in the cylindrical battery 190, the venting portion 152 ruptures and a gas generated inside the battery housing 142 may be externally discharged.

The venting portion 152 may be continuously or discontinuously formed while drawing a circle on the bottom surface of the battery housing 142. As a modification, the venting portion 152 may be formed in a linear pattern or another pattern.

Since the diameter of the connection portion 145c of the second current collector 145 is larger than the diameter of the cavity in the core of the electrode assembly 110, when the venting portion 152 is ruptured and the gas generated inside the battery housing 142 is discharged to the outside, it is possible to prevent the electrode or separator located near the core from coming out.

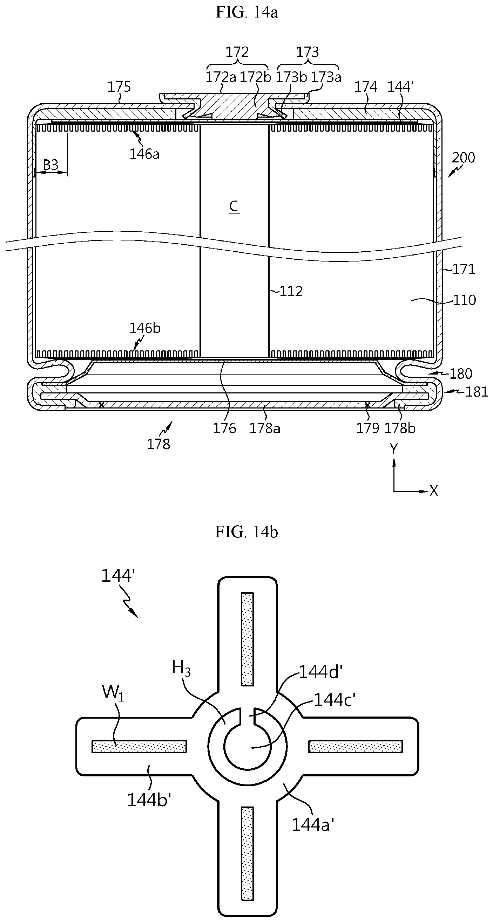

FIG. 14a is a cross-sectional view of a cylindrical battery 200 taken along a Y-axis, according to another embodiment of the present disclosure.

Referring to FIG. 14a, compared to the cylindrical battery 190 of FIG. 13a, the cylindrical battery 200 is substantially identical in a structure of an electrode assembly 110 and is different in that a remaining structure excluding the electrode assembly 110 is changed.

In detail, the cylindrical battery 200 includes a battery housing 171 through which a rivet-type terminal 172 penetrates. The terminal 172 is installed in a through hole of the closed portion (bottom) at the second end of the battery housing 171. The lower edge of the terminal 172 is coupled by riveting to a through hole of the battery housing 171 with a first sealing gasket 173 having an insulating property provided therebetween. The riveting may be accomplished by pressing the lower edge portion of the terminal 172 with a caulking jig to plastically deform the corresponding portion toward the bottom of the battery housing 171. The terminal 172 is externally exposed towards a direction opposite to a gravity direction.

The terminal 172 includes a terminal exposure portion 172a and a terminal insertion portion 172b. The terminal exposure portion 172a is exposed to an outer side of a closed portion of the battery housing 171. The terminal exposure portion 172a may be located approximately at a center portion of the closed portion of the battery housing 171. A maximum diameter of the terminal exposure portion 172a may be formed larger than a maximum diameter of the through hole formed in the closed portion of the battery housing 171. The terminal insertion portion 172b may penetrate approximately the center portion of the closed portion of the battery housing 171 and be electrically connected to the uncoated portion 146a of the first electrode. The terminal insertion portion 172b may be riveted on an inner surface of the battery housing 171. In other words, a lower circumferential end of the terminal insertion portion 172b may be plastically deformed to be bent towards the inner surface of the battery housing 171. A maximum diameter of the lower end portion of the terminal insertion portion 172b may be greater than the maximum diameter of the through hole formed in the closed portion of the battery housing 171. A lower surface of the terminal insertion portion 172b may be substantially flat, and welded to the first current collector 144' connected to the uncoated portion 146a of the first electrode.

FIG. 14b is a top plan view showing the structure of the first current collector 144'. Referring to FIG. 14b, the first current collector 144' has substantially the same structure as the current collector 145 illustrated in FIG. 13c. That is, the first current collector 144' includes a support portion 144a' having a hole (H₃), a plurality of leg portions 144b' extending in a radial direction from the support portion 144', and a connection portion 144c' provided inside the hole (H₃), and a bridge portion 144d' for connecting the support portion 144a' and the connection portion 144c'. The connection portion 144c' of the first current collector 144' may be welded to the lower flat end of the terminal insertion portion 172b of the terminal 172. The plurality of leg portions 144b' may be welded to the welding target region defined in the bent surface region of the upper portion of the electrode assembly 110.

Referring to FIG. 14a, an insulator 174 formed of an insulating material may be arranged between the first current collector 144' and the inner surface of the battery housing 171. The insulator 174 is in contact with the upper surface of the first current collector 144' and the inner surface of the closed portion of the battery housing 171. The insulator 174 covers an upper portion of the first current collector 144' and an upper edge portion of the electrode assembly 110. Accordingly, an outer side uncoated portion of the electrode assembly 110 may be prevented from causing a short-circuit by contacting the inner surface of the battery housing 171 having a different polarity. The insulator 174 is formed of an insulating polymer resin.

The terminal insertion portion 172b of the terminal 172 may penetrate the insulator 174 and be welded to the first current collector 144'. To this end, the central portion of the insulator 174 is provided with a hole exposing the lower portion of the terminal insertion portion 172b. The diameter of the hole may be larger than the diameter of the lower portion of the terminal insertion portion 172b.

The first sealing gasket 173 is arranged between the battery housing 171 and the terminal 172 to prevent the battery housing 171 and the terminal 172 having opposite polarities from electrically contacting each other. Accordingly, the top surface 175 of the battery housing 171 having an approximately flat shape may function as an electrode terminal of the cylindrical battery 200.

The first sealing gasket 173 includes a gasket exposure portion 173a and a gasket insertion portion 173b. The gasket exposure portion 173a is arranged between the terminal exposure portion 172a of the terminal 172 and the battery housing 171. The gasket insertion portion 173b is arranged between the terminal insertion portion 172b of the terminal 172 and the battery housing 171. The gasket insertion portion 173b may be closely adhered to the inner surface of the battery housing 171 by being deformed together during riveting of the terminal insertion portion 172b. The first sealing gasket 173 may be formed of, for example, an insulating polymer resin.

The gasket exposure portion 173a of the first sealing gasket 173 may have a shape extending to cover an outer side surface of the terminal exposure portion 172a of the terminal 172. When the first sealing gasket 173 covers the outer side surface of the terminal 172, a short-circuit may be prevented from being occurred during a process of combining an electric connection component, such as a bus bar, to the top surface of the battery housing 171 and/or the terminal 172. Although not illustrated in the drawing, the gasket exposure portion 173a may have a shape extending so as to cover not only the outer side surface of the terminal exposure portion 172a, but also at least an outer circumferential part of the top surface thereof.

When the first sealing gasket 173 is formed of a polymer resin, the first sealing gasket 173 may be combined to the battery housing 171 and the terminal 172 via thermal fusion. In this case, air-tightness at a combined interface of the first sealing gasket 173 and the terminal 172, and a combined interface of the first sealing gasket 173 and the battery housing 171, may be reinforced. Meanwhile, when the gasket exposure portion 173a of the first sealing gasket 173 has a shape extending up to a top surface of the terminal exposure portion 172a, the terminal 172 may be combined integrally to the first sealing gasket 173 via insert injection molding.

A remaining region 175 excluding a region of the top surface of the battery housing 171, which is occupied by the terminal 172 and first sealing gasket 173, corresponds to an electrode terminal having a polarity opposite to the terminal 172.

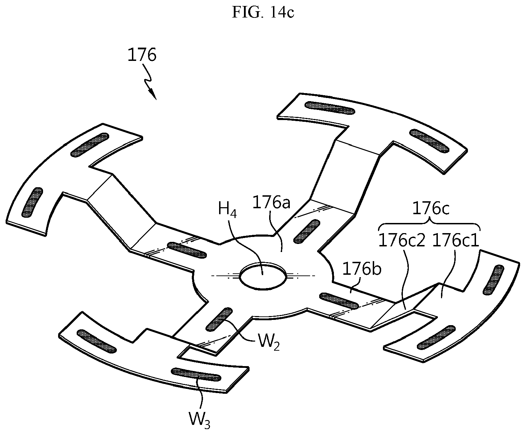

FIG. 14c is a perspective view showing the structure of a second current collector 176. Referring to FIG. 14c, the second current collector 176 is combined to a bottom of the electrode assembly 110. The second current collector 176 is formed of a conductive metal material, such as aluminum, steel, copper, nickel, or the like. At least a part of the second current collector 176 may be coupled to a welding target region included in the bent surface region of the uncoated portion 146b of the second electrode by welding.

The second current collector 176 includes a support portion 176a, and a plurality of leg portions 176b extending in a radial direction from the support portion 176a and welded to the welding target region. The support portion 176a includes a hole (H₄) in the center. The electrolyte may be injected through the hole (H₄). The diameter of the hole (H₄) is more than 0.5 times of the diameter of the cavity in the core of the electrode assembly 110. The function of the hole (H₄) is substantially the same as that of the hole (H₁) described above.

Preferably, at least a part of the second current collector 176 may be electrically connected to the battery housing 171. In an example, at least a part of an edge portion of the second current collector 176 may be arranged between the inner surface of the battery housing 171 and a second sealing gasket 178b. To this end, the second current collector 176 includes a housing connection portion 176c. The housing connection portion 176c includes a connection part 176c2 extending obliquely from the end of the leg portion 176b toward the lower surface of the beading portion 180, and a contact part 176c1 disposed on the lower surface of the beading portion 180. The contact part 176c1 may extend in an arc shape along the circumferential direction of the beading portion 180 to increase a contact area with the beading portion 180.

At least a part of the edge portion of the second current collector 176, for example the contact portion 176c1, may be fixed to a beading portion 180 via welding, while being supported at a lower surface of the beading portion 180 formed at the lower portion of the battery housing 171. As a modification, at least the portion of the edge portion of the second current collector 176 may be directly welded to an inner wall surface of the battery housing 171.

Preferably, the second current collector 176 and the welding target region included in the bent surface region of the uncoated portion 146b may be combined via welding, for example, laser welding. Here, the welding is performed at a region of the bent surface region of the uncoated portion 146b, where the average number of overlapping layers of the uncoated portion 146b is 5 or greater or the average stacking thickness of the uncoated portion 146b is 25 µm or more.

Meanwhile, the welding pattern (W₁) formed on the leg portion 144b' of the first current collector 144' and the welding pattern (W₂) formed on the leg portion 176b of the second current collector 176 may start from a location spaced apart from the center of the core of the electrode assembly 110 by substantially the same distance and extend in the radial direction. The radial length of the welding pattern (W₁) may be the same as or different from the radial length of the welding pattern (W₂). In one example, the radial length of the welding pattern (W₁) is longer than the radial length of the welding pattern (W₂). This is because the second current collector 176 includes the connection part 176c2, so the leg portion 176b of the second current collector 176 is shorter than the leg portion 144b' of the first current collector 144'. At least one welding pattern (W₃) is also formed on the contact part 176c1 of the second current collector 176. The welding pattern (W₃) may have a shape of a straight line or an arc. The welding patterns (W₁, W₂, W₃) may be continuous welding beads or an arrangement of discontinuous welding beads.

A sealing body 178 sealing the opening at the first end of the battery housing 171 includes a cap 178a and a second sealing gasket 178b. The second sealing gasket 178b electrically separates the cap 178a and the battery housing 171 from each other. A crimping portion 181 fixes an edge of the cap 178a and the second sealing gasket 178b together. The cap 178a includes a venting portion 179. A configuration of the venting portion 179 is substantially the same as the above-described embodiment (modification).

Preferably, the cap 178a may be formed of a conductive metal material. However, because the sealing gasket 178b is arranged between the cap 178a and the battery housing 171, the cap 178a does not have an electric polarity. The sealing body 178 functions to seal the opening at the lower portion of the battery housing 171 and discharge a gas when internal pressure of the cylindrical battery 200 increases to a threshold value or greater.

Preferably, the terminal 172 electrically connected to the uncoated portion 146a of the first electrode is used as a first electrode terminal. Also, the portion 175 excluding the terminal 172, among the upper surface of the battery housing 171 electrically connected to the uncoated portion 146b of the second electrode via the second current collector 176, is used as a second electrode terminal having an opposite polarity to the first electrode terminal. As such, when two electrode terminals are located at a top portion of the cylindrical battery 200, it is possible to arrange an electric connection component, such as a bus bar, only at one side of the cylindrical battery 200. Accordingly, a battery pack structure may be simplified and energy density may be improved. Also, the portion 175 used as the second electrode terminal has an approximately flat shape, and thus may secure a sufficient bonding area when bonding an electric connection component, such as a bus bar. Accordingly, the cylindrical battery 200 may reduce resistance at a bonding portion of the electric connection component to a preferable level.

In the present disclosure, even when the uncoated portions 146a and 146b are bent towards a core, a cavity 112 of the core of the electrode assembly 110 is not blocked but may be opened upward. In this regard, the first electrode and second electrode may include uncoated cut portions (see B of FIG. 5) near the core. Design conditions of the width d of the uncoated cut portion B and the bending length h of the uncoated portions 146a and 146b have been described above.

When the cavity 112 is not blocked, there is no difficulty in an electrolyte injection process, and an electrolyte injection efficiency is improved. Also, by inserting a welding jig through the cavity 112, a process of welding between the second current collector 145 and the bottom of the battery housing 142 or welding between the first current collector 144' and the terminal 172 may be easily performed.

The cylindrical battery 200 according to an embodiment of the present disclosure has an advantage in that electrical connection can be performed at an upper portion.

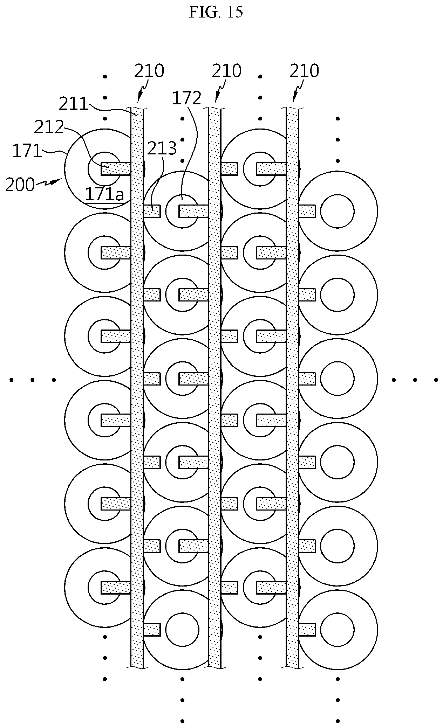

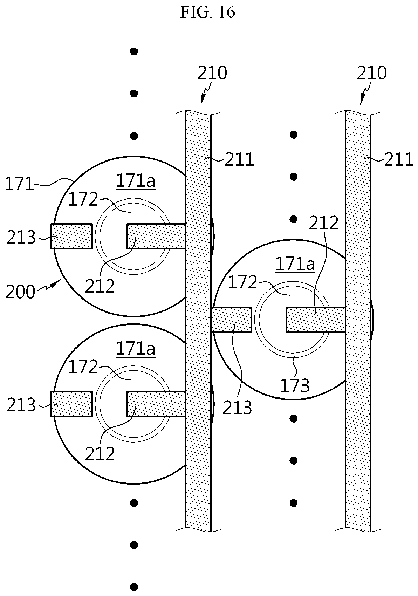

FIG. 15 is a top plan view showing a state in which a plurality of cylindrical batteries 200 are electrically connected, and FIG. 16 is a partially enlarged view of FIG. 15.

Referring to FIGS. 15 and 16, a plurality of cylindrical batteries 200 may be connected in series and in parallel at the upper portion of the cylindrical batteries 200 using a bus bar 210. The number of cylindrical batteries 200 may be increased or decreased in consideration of the capacity of the battery pack.

In each cylindrical battery 200, the terminal 172 may have a positive polarity and a flat surface 171a around the terminal 172 of the battery housing 171 may have a negative polarity, or vice versa.

Preferably, the plurality of cylindrical batteries 200 may be arranged in a plurality of columns and rows. Columns are provided in a vertical direction in the drawing, and rows are provided in a left and right direction in the drawing. In addition, in order to maximize space efficiency, the cylindrical batteries 200 may be arranged in a closest packing structure. The closest packing structure is formed when an equilateral triangle is formed by connecting the centers of the terminals 172 exposed to the outside of the battery housing 171 to each other. Preferably, the bus bar 210 connects the cylindrical batteries 200 arranged in the same column in parallel with each other, and connects the cylindrical batteries 200 arranged in two adjacent columns in series with each other.

Preferably, the bus bar 210 may include a body portion 211, a plurality of first bus bar terminals 212 and a plurality of second bus bar terminals 213 for serial and parallel connection.

The body portion 211 may extend along a column of cylindrical batteries 200 between adjacent terminals 172. Alternatively, the body portion 211 may extend along a column of cylindrical batteries 200, and the body portion 211 may be regularly bent like a zigzag shape.

The plurality of first bus bar terminals 212 may extend in one side direction of the body portion 211 and may be electrically coupled to the terminal 172 of the cylindrical battery 200 located in one side direction. Electrical coupling between the first bus bar terminal 212 and the terminal 172 may be achieved by laser welding, ultrasonic welding, or the like.

The plurality of second bus bar terminals 213 may extend from the other side of the body portion 211 and may be electrically coupled to the flat surface 171a around the terminal 172 located in the other direction. Electrical coupling between the second bus bar terminal 213 and the flat surface 171a may be performed by laser welding, ultrasonic welding, or the like.

Preferably, the body portion 211, the plurality of first bus bar terminals 212 and the plurality of second bus bar terminals 213 may be formed of one conductive metal plate. The metal plate may be, for example, an aluminum plate or a copper plate, but the present disclosure is not limited thereto. In a modified example, the body portion 211, the plurality of first bus bar terminal 212 and the second bus bar terminal 213 may be manufactured as separate pieces and then coupled to each other through welding or the like.

The cylindrical battery 200 of the present disclosure as described above has a structure in which resistance is minimized by expanding a welding area through the bent surface region, multiplexing current paths using the second current collector 176, minimizing a current path length, or the like. The AC resistance of the cylindrical battery 200 measured through a resistance meter between the positive electrode and the negative electrode, namely between the terminal 172 and the flat surface 171a around the terminal 172, may be 0.5 milliohm (mS2) to 4 milliohms (mΩ), preferably 1 milliohm (mS2) to 4 milliohms (mS2) suitable for fast charging.

In the cylindrical battery 200 according to the present disclosure, since the terminal 172 having a positive polarity and the flat surface 171a having a negative polarity are located in the same direction, the electrical connection of the cylindrical batteries 200 may be easily implemented using the bus bar 210.

In addition, since the terminal 172 of the cylindrical battery 200 and the flat surface 171a around the terminal 172 have a large area, the coupling area of the bus bar 210 may be sufficiently secured to sufficiently reduce the resistance of the battery pack including the cylindrical battery 200.

In addition, since electrical wiring may be performed at the upper portion of the cylindrical battery 200, there is an advantage in that the energy density per unit volume of the battery module/pack can be maximized.

A cylindrical battery according to the above-described embodiments (modifications) may be used to manufacture a battery pack.

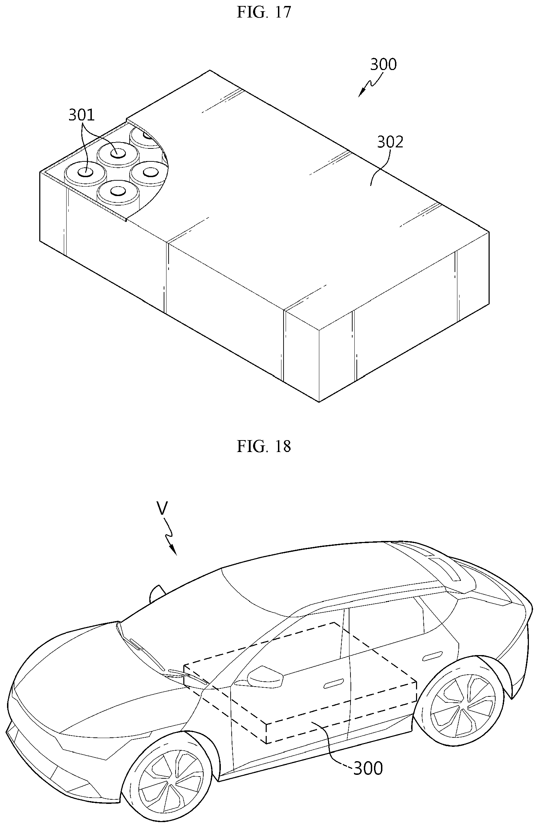

FIG. 17 is a view schematically showing a configuration of a battery pack, according to an embodiment of the present disclosure.

Referring to FIG. 17, a battery pack 300 according to an embodiment of the present disclosure includes an assembly in which cylindrical batteries 301 are electrically connected to each other, and a pack housing 302 accommodating the same. The cylindrical battery 301 may be any one of batteries according to the above-described embodiments (modifications). In the drawing, for convenience of illustration, components, such as a bus bar for electric connection of the cylindrical batteries 301, a cooling unit, an external terminal or the like are not illustrated.

The battery pack 300 may be mounted on a vehicle. For example, the vehicle may be an electric vehicle, a hybrid vehicle, or a plugin hybrid vehicle. The vehicle includes a four-wheeled vehicle or a two-wheeled vehicle.

FIG. 18 is a view showing a vehicle including the battery pack 300 of FIG. 17.

Referring to FIG. 18, a vehicle V according to an embodiment of the present disclosure includes the battery pack 300 according to an embodiment of the present disclosure. The vehicle V operates by receiving power from the battery pack 300 according to an embodiment of the present disclosure.

According to an aspect of the present disclosure, damage to an active material layer or separator may be prevented even when a welding output is increased, by sufficiently securing a welding target region, where an uncoated portion is uniformly overlapped, in a radial direction of an electrode assembly, when uncoated portions exposed at both ends of the electrode assembly are bent.

According to another aspect of the present disclosure, an electrolyte injection process and a welding process between a battery housing (or terminal) and a current collector may be easily performed by improving a structure of an uncoated portion adjacent to a core of an electrode assembly, thereby preventing a cavity in the core of the electrode assembly from being blocked when the uncoated portion is bent.

According to another aspect of the present disclosure, an electrode assembly in which energy density is improved and resistance is decreased may be provided by directly welding, to a current collector, a bent surface region of an uncoated portion, rather than using an electrode tab of a strip shape.

According to another aspect of the present disclosure, a cylindrical battery having a structure in which internal resistance is low and welding strength between a current collector and an uncoated portion is improved, and a battery pack and vehicle including the same may be provided.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

**1.** An electrode assembly, in which a first electrode, a second electrode, and a separator interposed therebetween are wound about an axis to define a core and an outer circumferential surface,
wherein at least one of the first electrode and the second electrode comprises, at a long side end portion, an uncoated portion exposed beyond the separator in a direction of the axis,
wherein at least a part of the uncoated portion is bent in a radial direction of the electrode assembly to define a bent surface region having overlapping layers of the uncoated portion, and
wherein the bent surface region comprises a welding target region having a number of the overlapping layers of the uncoated portion, the welding target region extending along a radial direction of the electrode assembly.

**2.** The electrode assembly of claim 1, wherein a thickness of the uncoated portion is 5 µm to 25 µm, and an interval between the uncoated portion in adjacent winding turns is 350 µm to 380 µm.

**3.** The electrode assembly of claim 1, wherein, in the welding target region, an average stacking thickness of the overlapping layers of the uncoated portion is 25 µm or more.

**4.** The electrode assembly of claim 1, wherein, in the welding target region, the overlapping layers of the uncoated portion are stacked in a substantially perpendicular direction to the axis.

**4.** The electrode assembly of claim 1, wherein in the welding target region, the overlapping layers of the uncoated portion are stacked in a substantially perpendicular direction to the axis.

**5.** The electrode assembly of claim 1, wherein a ratio of a length of the welding target region in the radial direction to a radius of the electrode assembly is 30% or greater.

**6.** The electrode assembly of claim 1, wherein a ratio of a length of the welding target region in the radial direction to a radius of the electrode assembly is 40% or greater.

**7.** The electrode assembly of claim 1, wherein a ratio of a length of the welding target region in the radial direction to a radius of the electrode assembly is 50% or greater.

**8.** The electrode assembly of claim 1, wherein a ratio of a length of the welding target region in the radial direction to a radius of the electrode assembly is 60% or greater.

**9.** The electrode assembly of claim 1, wherein a ratio of a length of the welding target region in the radial direction to a radius of the electrode assembly is 70% or greater.

**10.** The electrode assembly of claim 1, wherein the welding target region has an average number of overlapping layers of the uncoated portion that is 5 or greater along the radial direction of the electrode assembly.

**11.** The electrode assembly of claim 1, wherein the welding target region has an average number of overlapping layers of the uncoated portion that is 6 or greater along the radial direction of the electrode assembly.

**12.** The electrode assembly of claim 1, wherein the welding target region has an average number of overlapping layers of the uncoated portion that is 7 or greater along the radial direction of the electrode assembly.

**13.** The electrode assembly of claim 1, wherein the welding target region has an average number of overlapping layers of the uncoated portion that is 8 or greater along the radial direction of the electrode assembly.

**14.** The electrode assembly of claim 1, wherein the welding target region has an average number of overlapping layers of the uncoated portion that is 9 or greater along the radial direction of the electrode assembly.

**15.** The electrode assembly of claim 1, wherein the welding target region has an average number of overlapping layers of the uncoated portion that is 10 or greater along the radial direction of the electrode assembly.

**16.** The electrode assembly of claim 1, wherein another part of the uncoated portion is not bent, and
wherein a boundary between the welding target region and the another part of the uncoated portion is cut in the direction of the axis.

**17.** The electrode assembly of claim 1, wherein the welding target region is radially arranged from a center of the core to the outer circumferential surface of the electrode assembly.

**18.** The electrode assembly of claim 1, wherein the welding target region is arranged in a cross shape having a center at the core of the electrode assembly and extending outwards.

**19.** The electrode assembly of claim 1, further comprising a current collector welded to the welding target region.

**20.** The electrode assembly of claim 1, wherein the current collector is laser-welded or ultrasonic-welded to the welding target region.

**21.** The electrode assembly of claim 19, wherein a welding pattern between the current collector and the welding target region includes a pattern of a plurality of dots linearly arranged along the radial direction of the electrode assembly.

**22.** The electrode assembly of claim 1, wherein the uncoated portion includes, at a region adjacent to the core or the outer circumference of the electrode assembly, an uncoated cut portion in which a height of the uncoated cut portion in the direction of the axis is lower than that of a remaining region of the uncoated portion.

**23.** The electrode assembly of claim 22, wherein a portion of the uncoated portion remaining in the uncoated cut portion is not bent.

**24.** The electrode assembly of claim 22, wherein a width of winding turns in the radial direction formed when the uncoated cut portion is wound is greater than a bending length of the uncoated portion.

**25.** The electrode assembly of claim 22, wherein a height of the uncoated portion remaining in the uncoated cut portion is 0.2 to 4 mm.

**26.** The electrode assembly of claim 1, wherein prior to bending, a maximum height of the uncoated portion extending along the direction of the axis is 12 mm.

**27.** The electrode assembly of claim 1, wherein a bending depth of the uncoated portion is 1 mm to 5 mm.

**28.** The electrode assembly of claim 1, wherein the at least one electrode of the first electrode and the second electrode having the uncoated portion includes a pair of short sides along the direction of the axis, and the pair of short sides have the same length or different lengths.

**29.** The electrode assembly of claim 1, wherein the at least one electrode of the first electrode and the second electrode having the uncoated portion includes a pair of long sides along the winding direction, and the pair of long sides have the same length or different lengths.

**30.** A battery comprising:
an electrode assembly, in which a first electrode, a second electrode, and a separator provided therebetween are wound about an axis to define a core and an outer circumferential surface of the electrode assembly, wherein at least one of the first electrode and the second electrode comprises, at a long side end portion, an uncoated portion exposed beyond the separator in a direction of the axis, wherein at least a part of the uncoated portion is bent in a radial direction of the electrode assembly to define a bent surface region having overlapping layers of the uncoated portion, and wherein the bent surface region comprises a welding target region having a number of the overlapping layers of the uncoated portion, the welding target region extending along a radial direction of the electrode assembly;
a battery housing configured to accommodate the electrode assembly, the battery housing having a first end with an opening and a second end;
a sealing body configured to seal the opening at the first end of the battery housing;
a terminal having a surface externally exposed through the second end of the battery housing or the sealing body;
a first current collector electrically connected to the welding target region of the uncoated portion of the first electrode and the terminal; and
a second current collector electrically connected to the welding target region of the uncoated portion of the second electrode and the battery housing.

**31.** The battery of claim 30, wherein the terminal is a rivet terminal located in a hole in the second end of the battery housing, and
wherein the battery further comprises a sealing gasket located between the rivet terminal and the hole of the second end of the battery housing.

**32.** The battery of claim 31, wherein the rivet terminal is welded to the first current collector.

**33.** The battery of claim 30, wherein the sealing body includes a cap crimped together with a sealing gasket at the opening of the first end of the battery housing, and
wherein the sealing gasket is located between the cap and the opening of the first end of the battery housing to insulate the cap from the battery housing.

**34.** The battery of claim 30, wherein the battery housing includes a beading portion adjacent the opening of the first end of the battery housing,
wherein the sealing body includes a cap crimped together with a sealing gasket at the opening of the first end of the battery housing, and
wherein the second current collector has at least a portion of an edge region arranged between the beading portion and the sealing gasket and contacting an inner surface of the beading portion.

**35.** The battery of claim 34, wherein the second current collector has at least a portion of an edge region welded to the inner surface of the beading portion.

**36.** The battery of claim 34, wherein the cap has no electrical polarity.

**37.** The battery of claim 30, wherein the welding target region has an average number of overlapping layers of the uncoated portion that is 5 or greater along the radial direction of the electrode assembly.

**38.** The battery of claim 30, wherein, in the welding target region, an average stacking thickness of the overlapping layers of the uncoated portion is 25 µm or more.

**39.** The battery of claim 30, wherein the first current collector includes a first welding pattern formed by welding between the welding target region of the uncoated portion of the first electrode and the first current collector, and
wherein the second current collector includes a second welding pattern formed by welding between the welding target region of the uncoated portion of the second electrode and the second current collector.

**40.** The battery of claim 39, wherein each of the first welding pattern and the second welding pattern start at a point spaced apart from a center of the core of the electrode assembly by 5 mm to 10 mm and extend along the radial direction of the electrode assembly.

**41.** The battery of claim 39, wherein each of the first welding pattern and the second welding pattern start at a point spaced apart from a center of the core of the electrode assembly by substantially a same distance and extend along the radial direction of the electrode assembly.

**42.** The battery of claim 39, wherein the first welding pattern and the second welding pattern have a same length in the radial direction of the electrode assembly.

**43.** The battery of claim 39, wherein the first welding pattern and the second welding pattern have different lengths in the radial direction of the electrode assembly.

**44.** The battery of claim 43, wherein the first welding pattern is longer than the second welding pattern.

**45.** The battery of claim 30, wherein before the uncoated portion is bent, a maximum height of the uncoated portion extending along the direction of the axis is 12 mm.

**46.** The battery of claim 30, wherein another part of the uncoated portion is not bent, and
wherein a boundary between the welding target region and the another part of the uncoated portion is cut in the direction of the axis.

**47.** The battery of claim 30, wherein a bending depth of the uncoated portion is 1 mm to 5 mm.

**48.** The battery of claim 30, wherein each of the first electrode and the second electrode includes a pair of short sides along the direction of the axis, and the pair of short sides have the same length or different lengths.

**49.** The battery of claim 30, wherein each of the first electrode and the second electrode includes a pair of long sides along the winding direction, and the pair of long sides have the same length or different lengths.

**50.** The battery of claim 30, wherein resistance measured between the terminal and the second end of the battery housing is 4 milliohms (mΩ) or less.

**51.** The battery of claim 30, wherein a ratio of a diameter of the battery to a height of the battery is greater than 0.4.

**52.** A battery pack comprising the battery according to any one of claims 30 to 51.

**53.** A vehicle comprising the battery pack according to claim 52.
